Europäisches Patentamt

**European Patent Office**

Office européen des brevets

(19)

(11) Numéro de publication : **0 014 662**
**B1**

(12) # FASCICULE DE BREVET EUROPÉEN

(45) Date de publication du fascicule du brevet :
09.06.82

(51) Int. Cl.³ : **G 21 D 5/08**, G 21 D 1/04,
G 21 C 15/24

(21) Numéro de dépôt : **80400194.9**

(22) Date de dépôt : **07.02.80**

(54) Circuit caloporteur secondaire pour réacteur nucléaire refroidi par sodium liquide.

(30) Priorité : 09.02.79 FR 7903335
15.03.79 FR 7906595

(43) Date de publication de la demande :
20.08.80 (Bulletin 80/17)

(45) Mention de la délivrance du brevet :
09.06.82 Bulletin 82/23

(84) Etats contractants désignés :
BE CH DE GB IT LU NL SE

(56) Documents cités :
CH A 535 476
DE B 1 811 525
FR A 1 471 970
FR A 1 556 449
FR A 2 270 661
FR A 2 321 750
FR A 2 379 881
NL A 7 609 246

L.J. KOCH et al. « HAZARD SUMMARY REPORT,
Experimental Breeder Reactor II », (EBR II), report NAL-5719.

NUCLEAR ENGINEERING INTERNATIONAL, vol.
21, no. 246, juillet 1976, pages 49-51. S. DREYER :
« The heat transfer system of SNR-300 ».

(73) Titulaire : **ELECTRICITE DE FRANCE Service National**
**2, rue Louis Murat**
**F-75008 Paris (FR)**

(72) Inventeur : **Brachet, Alain**
**34, Avenue Saint Laurent, Bât. 4**
**F-91400 Orsay (FR)**

(74) Mandataire : **Mongrédien, André et al**
**c/o Brevatome 25, rue de Ponthieu**
**F-75008 Paris (FR)**

Imprimerie Jouve, 18, rue St-Denis, 75001 Paris, France

## Circuit caloporteur secondaire pour réacteur nucléaire refroidi par sodium liquide

La présente invention a pour objet un circuit caloporteur secondaire pour réacteurs nucléaires refroidis par un agent caloporteur tel qu'un métal liquide ou un mélange de sels de métaux liquides du même type.

Pour simplifier, on désignera par la suite ces deux types de fluides caloporteurs par les expressions « métal liquide », ou « sodium liquide », tenant compte du fait que les centrales nucléaires à neutrons rapides utilisent, dans l'état actuel de la technique, le sodium liquide comme agent caloporteur. Celui-ci est habituellement disposé dans deux ensembles de circuits caloporteurs successifs. Dans le premier, dénommé circuit primaire, le sodium extrait la chaleur produite par les éléments combustibles du cœur et la transporte jusqu'à un échangeur de chaleur, dénommé échangeur intermédiaire, où il se refroidit pour céder sa chaleur à du sodium contenu dans un deuxième ensemble de circuits totalement indépendants du circuit primaire et dénommé circuit secondaire. Dans le circuit secondaire, le sodium chaud sortant de l'échangeur intermédiaire transporte la chaleur jusqu'à un nouvel échangeur de chaleur, le générateur de vapeur où le sodium cède sa chaleur à de l'eau sous pression qui est vaporisée pour finalement alimenter le turbo-générateur d'électricité.

Habituellement, le circuit secondaire est fractionné en plusieurs sous-circuits indépendants ou boucles secondaires montées en parallèle. Ces boucles, au nombre de 3 ou 4 par exemple, sont identiques quant à la puissance qu'elles transportent et à leur organisation générale. On peut, le cas échéant, mettre une boucle à l'arrêt, et faire fonctionner les autres au régime nominal : la puissance délivrée par la centrale est alors diminuée en proportion de la puissance de la boucle indisponible.

L'adoption du circuit secondaire dans ce type de réacteur a pour but de confiner avec une grande sûreté le sodium primaire radioactif et de protéger le circuit primaire des répercussions éventuelles d'une fuite de la surface d'échange thermique du générateur de vapeur.

En effet, dans une telle éventualité, de l'eau ou de la vapeur sous haute pression entre en contact avec le sodium. La réaction chimique qui s'ensuit est très exothermique et libère des produits de réaction corrosifs et dangereux (soude caustique, hydrogène). Il convient donc de protéger le cœur, c'est-à-dire le circuit primaire des contre-coups possibles de cette réaction sodium-eau (coups de bélier, pollution par la soude).

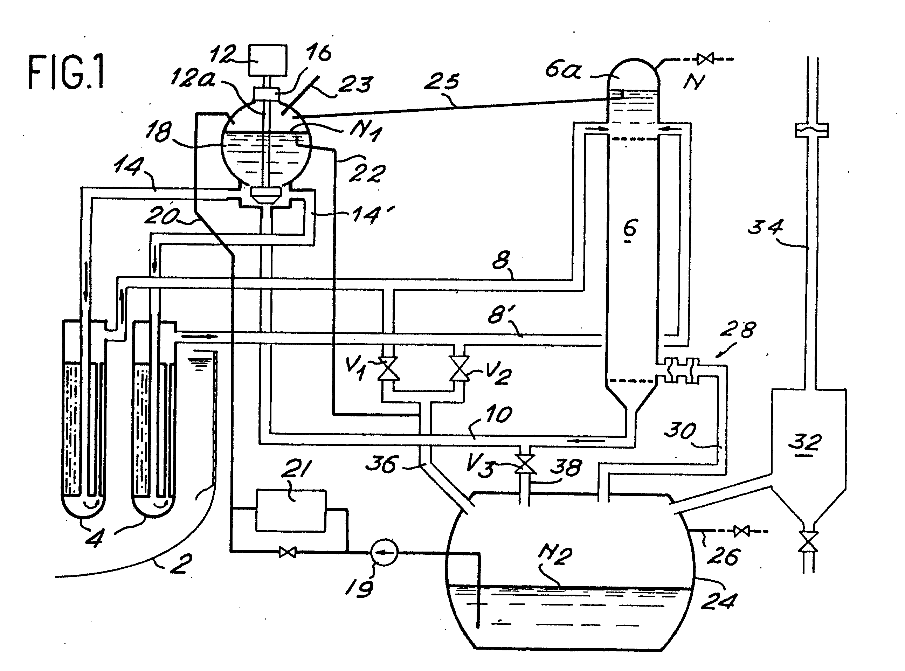

Sur la figure 1, on a représenté la structure habituelle d'une boucle secondaire de refroidissement d'un réacteur nucléaire à neutrons rapides. On trouve la cuve 2 du réacteur qui comporte le circuit primaire de refroidissement. Dans cette cuve, on trouve en particulier les échangeurs intermédiaires 4 (dans cet exemple de réalisation, il y en a deux) dont la sortie est raccordée au générateur de vapeur 6 par des conduites 8 et 8'. Le générateur de vapeur comporte à sa partie supérieure une poche d'argon 6a qui définit un niveau libre N de sodium. Comme on l'a indiqué dans ce générateur de vapeur 6, on a un échange entre le sodium secondaire et l'eau. La sortie du générateur de vapeur 6 est raccordée par la canalisation 10 à l'entrée de la pompe 12 dont les sorties sont raccordées par l'intermédiaire des conduites 14 et 14' respectivement aux entrées des échangeurs intermédiaires 4.

Les propriétés spécifiques du sodium liquide ont conduit à concevoir les pompes mécaniques à sodium selon une technologie particulière. Notamment pour réaliser les garnitures d'étanchéité à la traversée de l'arbre 12a, on fait appel généralement à une garniture mécanique 16 qui n'est pas directement mise au contact du sodium mais d'un gaz neutre (généralement l'argon) interposé entre le sodium et la garniture. Pour ce faire, il faut ménager dans le corps de la pompe une surface libre N1 de sodium surmontée d'une poche d'argon. L'arbre d'entraînement 12a vertical, traverse la surface libre et la poche d'argon avant d'atteindre la garniture 16. Il faut en outre prendre des dispositions pour que le niveau de sodium N1 ne puisse pas remonter intempestivement jusqu'à la garniture. L'artifice couramment utilisé pour cela, consiste à placer la pompe dans un réservoir dénommé réservoir d'expansion 18, car il est généralement d'une taille suffisante pour que toutes les augmentations envisageables du volume du sodium de la boucle secondaire (par dilatation thermique) soient absorbées dans ce réservoir 18, sans noyage de la garniture. En plaçant en outre ce réservoir au point le plus haut du circuit, on s'assure que, même si l'argon de la poche de protection venait à fuir, on n'aurait pas noyage de la garniture par un effet de vase communicant, entre le réservoir 18 et le reste de la boucle. De plus, pour éviter qu'en cas de fuite intempestive du sodium vers l'atmosphère, le sodium ne s'échappe en un jet sous forte pression, on s'efforce de limiter au maximum la pression dans la boucle secondaire. Avec la disposition précédente du réservoir d'expansion 18, cela revient à régler la pression de la poche d'argon de celui-ci à la valeur minimale acceptable. Celle-ci est égale à la pression atmosphérique augmentée d'une légère surpression qui assure que toute fuite éventuelle ne conduit pas à une entrée d'air dans la boucle secondaire.

Pour réaliser ce réglage, une conduite 20 d'appoint en sodium débouche dans le réservoir 18. Cette conduite 20 comprend une pompe de circulation 19 et un système de purification du sodium 21. De même, une conduite de trop-plein 22 part de ce réservoir 18. Enfin, une admission 23 d'argon permet de régler la pression d'argon à une valeur convenable. La canalisation 20 a son origine dans un réservoir 24 de stockage de sodium et de récupération éventuelle des produits venant d'une réaction sodium-eau en cas de fuite dans le générateur de vapeur 6, réservoir 24 dans lequel on maintient un niveau libre N2 par introduction par la canalisation 26 d'un gaz inerte tel que l'argon.

Comme on l'a déjà indiqué dans un tel type de réacteur nucléaire, il peut exister un risque de réaction sodium-eau violente en cas de fuite du générateur de vapeur et la volonté d'en protéger totalement le circuit primaire impose en pratique de protéger au maximum l'échangeur intermédiaire 4 qui constitue le seul point de contact possible entre le circuit primaire et le circuit secondaire.

Pour éviter ce risque, on prend un certain nombre de dispositions qui sont les suivantes :

a) mise en place à l'amont et à l'aval du générateur de vapeur de réservoirs anti-bélier, c'est-à-dire de réservoirs mis en communication directe avec la boucle secondaire et comportant une surface libre surmontée d'une poche d'argon. En cas de réaction sodium-eau, les ondes de pression issues du générateur de vapeur s'amortissent fortement dans ces réservoirs avant d'atteindre l'échangeur intermédiaire 4.

b) mise en place sur le générateur lui-même ou à proximité immédiate de membranes 28 d'éclatement de grand diamètre qui se rompent sous l'effet des coups de bélier et libèrent des orifices permettant la décompression de la boucle secondaire vers l'extérieur. En pratique, pour éviter l'explosion consécutive à la réaction de l'hydrogène avec l'oxygène de l'air, et pour éviter de polluer l'environnement par le sodium et la soude, on dispose encore à l'aval des membranes, le réservoir de récupération 24 (déjà décrit) jouant le rôle de séparateur des produits liquides et gazeux, relié par la conduite 30. Ce réservoir est lui-même prolongé, le cas échéant, par un second séparateur 32 encore plus efficace (séparateur cyclone par exemple) et une cheminée de rejet 34 à l'atmosphère des seuls produits gazeux (hydrogène, argon, vapeur d'eau, chargés encore de quelques aérosols de soude).

Un perfectionnement couramment utilisé pour simplifier ce système et en réduire le coût consiste à faire jouer au réservoir d'expansion de la pompe 18, le rôle du réservoir anti-bélier aval. Pour le réservoir anti-bélier amont, un autre perfectionnement consiste à le confondre avec le haut 6a du générateur de vapeur dans lequel on emprisonne alors une poche d'argon. Enfin, un autre perfectionnement consiste à faire jouer au réservoir de récupération 24 le rôle de réservoir de stockage du sodium de la boucle secondaire lorsque celle-ci est à l'arrêt et vidangée. Pour ce faire, il est évidemment nécessaire de disposer entre la boucle et le réservoir 24, en supplément des canalisations qui sont équipées de membranes d'éclatement un deuxième réseau de tuyauteries de vidange munies de vannes de grand diamètre (il faut pouvoir vidanger très rapidement la boucle secondaire en cas de fuite de sodium vers l'atmosphère survenant à un point quelconque de cette boucle).

Ce réseau de conduites consiste en particulier dans la conduite 36 associée aux vannes de vidange $V_1$ et $V_2$ qui raccordent le réservoir 24 aux canalisations secondaires 8 et 8' et dans la conduite 38 associée à la vanne $V_3$ qui raccorde la conduite 10 à ce même réservoir 24.

Le système ainsi constitué, y compris avec les perfectionnements mentionnés ci-dessus, comporte encore des servitudes d'exploitation et des dispositifs coûteux. C'est notamment le cas pour les membranes de rupture 28. Il est difficile d'éviter en pratique que le tarage de ces membranes (la pression pour laquelle elles se rompent) ne dérive avec le temps (vieillissement, fluage, fatigue). On est conduit à prévoir leur remplacement tous les 2 ou 3 ans par exemple. Ceci nécessite en outre un montage amovible complexe et susceptible de donner naissance à des fuites de sodium. Enfin on peut craindre qu'en cas de séisme, le coup de bélier entraîné par celui-ci, dans toutes les boucles secondaires simultanément, ne rompe toutes les membranes : le réacteur serait alors privé de ses circuits normaux d'évacuation de la puissance, et en particulier de la puissance résiduelle. Devant la gravité des conséquences d'une telle situation, il est nécessaire de mettre en place des moyens d'évacuation de la puissance résiduelle redondants et indépendants des boucles secondaires pour s'affranchir de ce risque.

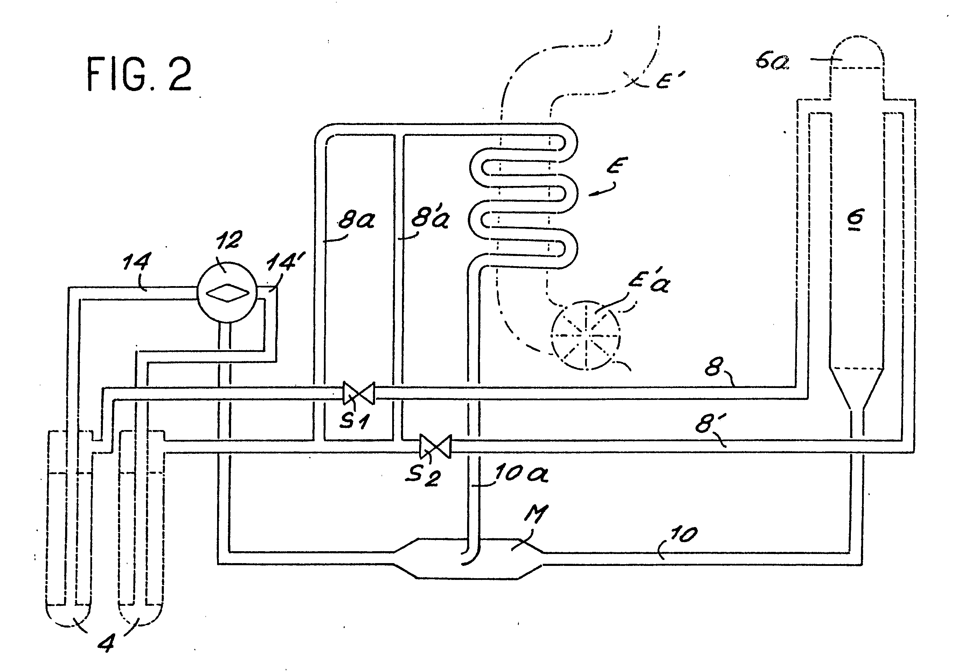

Sur la figure 2, on a représenté, selon l'art antérieur, un tel système de refroidissement de secours.

Il consiste essentiellement dans un échangeur supplémentaire E monté en parallèle sur le générateur de vapeur 6. Cet échangeur E est raccordé aux conduites 8, 8' et 10 par les conduites 8a, 8'a et 10a, la conduite 10a étant raccordée à la conduite 10 par un mélangeur 10M. On dérive ainsi une fraction du débit principal de sodium secondaire. La partie secondaire de cet échangeur E est constituée par une cheminée à air E' associée à un ventilateur E'a.

Il nécessite la mise en place de vannes de très grand diamètre ($S_1$, $S_2$) sur les tuyauteries principales 8, 8' et 10 et de mélangeurs M de veines de sodium à des températures différentes. Ces appareils sont coûteux et sources potentielles de pannes et d'incidents notamment en ce qui concerne les mélangeurs M dont une technologie totalement fiable n'est pas encore acquise dans l'état actuel de la technique. Pour des raisons de sûreté, on fait en sorte, généralement, que l'échangeur de secours soit alimenté par la pompe du circuit, mais aussi qu'il puisse être alimenté par thermosiphon ou convection naturelle. Ceci impose que cet échangeur E soit placé à un niveau sensiblement supérieur à celui des échangeurs intermédiaires.

Enfin, les calculs théoriques de propagation des coups de bélier consécutifs à la réaction sodium-eau montrent que le système hydraulique constitué par la boucle secondaire avec le générateur 6 muni de sa membrane et entouré de ses deux poches d'argon, ne permet pas toujours, dans les meilleures conditions, de limiter la transmission de surpressions significatives aux échangeurs intermédiaires. Il n'évite pas non plus facilement de polluer la boucle secondaire jusqu'à l'échangeur intermédiaire avec les produits de réaction. Une explication schématique et qualitative de ces faits est la suivante : lorsque la fuite se déclenche, la surpression initiale engendrée dans le générateur de vapeur amorce un mouvement oscillatoire de grande amplitude et d'assez longue période du sodium entre les deux réservoirs anti-bélier. La pression au niveau de la membrane, au lieu de croître continuellement, fluctue donc et il peut se faire que le premier pic de pression ait une amplitude et une durée insuffisantes pour rompre la membrane. Il faut alors attendre le deuxième pic et peut-être même le suivant pour obtenir la rupture. Durant ce laps de temps, la fuite continue à débiter et à emmagasiner de l'énergie de pression dans la boucle secondaire. Lorsque survient la rupture de la membrane, l'énergie de pression à évacuer étant plus élevée, il faut davantage de temps pour décomprimer le système. La conjonction de ces phénomènes se traduit par une tendance à accroître les sollicitations au niveau de l'échangeur intermédiaire et à polluer davantage le circuit.

c) comme il est indiqué plus haut, la vidange rapide de la boucle secondaire nécessite la présence de tuyauteries spéciales et de vannes de grand diamètre qui sont des appareillages coûteux. De plus, la présence de deux points hauts (la pompe et le haut du générateur) et de deux points bas (l'échangeur 4 et le bas du générateur 6) conduit à prévoir l'appareillage de vidange en au moins deux exemplaires, si ce n'est davantage car, comme il est indiqué sur la figure 1, la présence de deux échangeurs 4 en parallèle, par exemple, peut conduire à dédoubler les canalisations qui les alimentent ou en repartent. Chacune d'elles devra être munie d'une canalisation et d'une vanne de vidange (souvent elle-même doublée par sécurité). Au coût direct entraîné par la présence de ces vidanges s'ajoutent des astreintes d'exploitation. Ainsi, lorsque le circuit fonctionne, une fuite éventuelle du clapet de ces vannes provoque une vidange progressive de la boucle. Pour éviter d'avoir à mettre hors service une boucle secondaire, on est donc conduit à mettre en place la petite pompe de reprise 19 des fuites de sodium dans le réservoir de stockage 24. Cette pompe 19, à son tour, entraîne des sujétions : pour se garantir du risque de noyer les garnitures de la pompe principale 12, il faut prévoir une régulation de niveau que, par prudence, on renforce par un retour du sodium au stockage au moyen du trop-plein 22. De toute manière, si la fuite des vannes est excessive, il faut arrêter le fonctionnement de la boucle.

Généralement, la pompe de reprise 19, sert aussi, fort heureusement à d'autres fins. Par exemple, elle permet le remplissage de la boucle à partir du stockage après un arrêt. Elle peut aussi servir à alimenter les systèmes de purification 21 du sodium et de contrôle de pureté (pièges froids, indicateurs de bouchage). Au cours du remplissage, il convient de veiller à ce qu'une fausse manœuvre ne provoque pas un noyage de la garniture de pompe par effet de vase communicant entre les deux réservoirs anti-bélier si la pression qui y règne n'est pas convenable. Pour s'affranchir de ce risque, en supplément des régulations de niveau et du trop-plein déjà mentionnées, on prend la précaution de disposer dans un même plan horizontal le haut du générateur (ou le réservoir anti-bélier amont) et la pompe. Pour plus de sûreté encore, on relie les deux poches d'argon correspondantes par des tuyauteries d'équilibrage 25 des niveaux et des pressions. Tous ces appareillages sont évidemment coûteux et sources de sujétions d'exploitation et de pannes.

d) pour que les réservoirs anti-bélier aient une efficacité suffisante, on est amené à leur donner une capacité assez importante. De même, si l'on veut éviter que pour certains régimes transitoires, le niveau de sodium ne varie pas exagérément, il faut donner au réservoir d'expansion 18 une grande capacité. On a vu qu'il doit absorber les dilatations du sodium par effet thermique sans noyage de la garniture. Il doit aussi absorber les contractions thermiques du sodium par exemple lors d'un arrêt d'urgence du réacteur : le refroidissement très rapide du sodium et sa contraction corrélative pourraient se poursuivre jusqu'à désamorcer la pompe par dénoyage des ouïes d'aspiration. Dans ce cas, la pompe de reprise ne suffit pas à compenser le volume résultant de la contraction du sodium : il faut que le réservoir d'expansion ait une réserve suffisante de sodium pour le faire. Ce réservoir, dans lequel, en outre, la pompe doit trouver place avec une garde suffisante, comme on l'a vu, pour éviter le noyage de la garniture 16 est un gros réservoir lourd et coûteux.

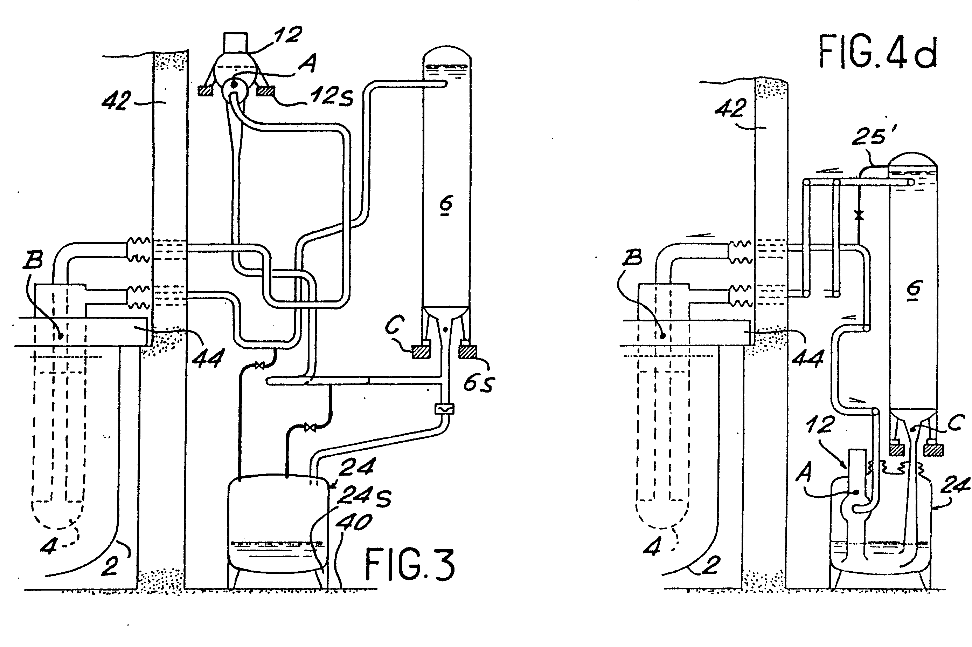

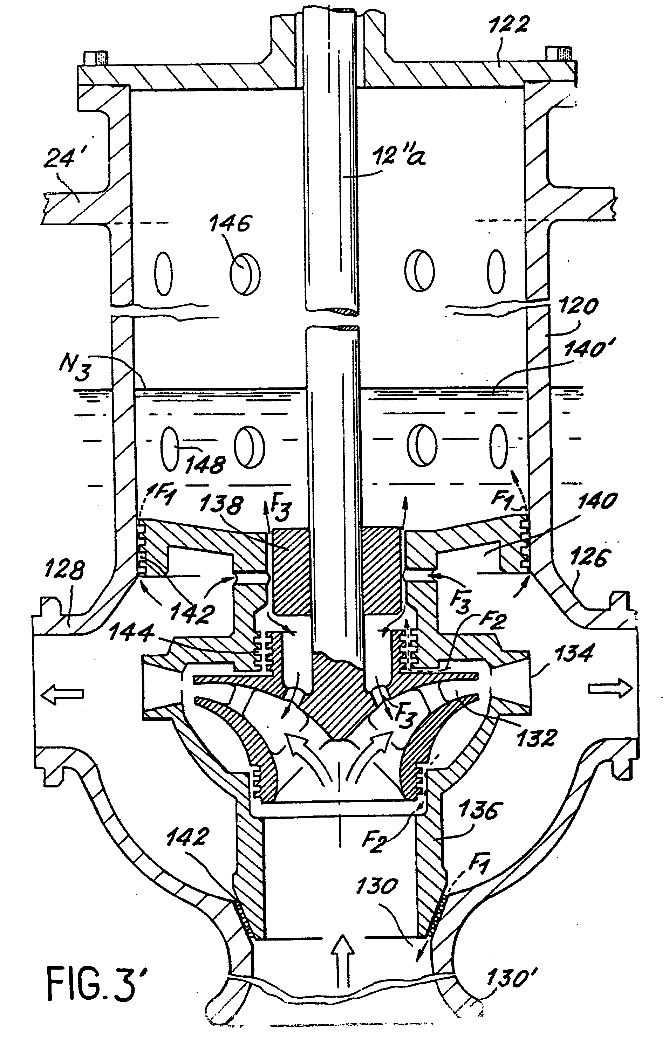

Sur la figure 3, on a représenté de façon plus concrète l'implantation d'un circuit de refroidissement secondaire conforme aux circuits représentés sur la figure 1. On a repris bien entendu les mêmes références pour désigner les parties communes. Sur cette figure, on a représenté en plus le radier inférieur 40 de l'installation nucléaire et la paroi 42 constituant l'enceinte de confinement du réacteur. On a fait figurer également le bouchon 44 de la cuve 2 du réacteur nucléaire. On a symbolisé également les massifs de supportage 12s de la pompe 12 avec son réservoir d'expansion 18, le massif de supportage 6s du générateur de vapeur 6 et les organes de supportage 24s du réservoir de stockage et de récupération 24.

L'implantation d'une boucle secondaire selon la conception déjà explicitée requiert un volume très important pour les deux séries de raisons suivantes :

a) pour que la boucle soit vidangeable par gravité — ce qui est la solution la plus sûre — il faut que le point le plus bas des tuyauteries principales soit assez au-dessus du réservoir de stockage. Il faut en effet avoir la place de loger les vannes de vidange, les tuyauteries de vidange et les lyres de dilatation que ces tuyauteries doivent comporter pour accommoder les variations de température. L'ensemble de la boucle secondaire et du réservoir de stockage se développe donc sur une grande hauteur coûteuse en supportage et importance des bâtiments.

b) les tuyauteries principales 8, 8' et 10 doivent elles-mêmes être munies de lyres de dilatation ou de dispositifs spéciaux de compensation de dilatation. En ce qui concerne les lyres, on peut montrer que la longueur de tuyauterie à haute température à disposer entre deux appareils (entre deux points fixes plus exactement) est proportionnelle à la puissance 3/2 de la distance de ces points fixes (elle est aussi proportionnelle à la racine carrée du diamètre de la tuyauterie). Ainsi, on voit sur la figure 3 que l'on a à relier entre eux trois points fixes selon les trois côtés du triangle ABC. Toutes les astreintes d'installation énumérées précédemment interviennent pour limiter les possibilités de réduire beaucoup les longueurs des côtés du triangle : ainsi, s'il est possible d'agir sur BC, il est plus difficile de réduire simultanément AB et AC (coïncidence des niveaux des poches d'argon, supportage du générateur de vapeur de préférence en point bas, nécessité de vidange gravitaire...). En conséquence, les métrés de tuyauterie seront importants, comme l'indique par exemple la figure 3. Ou bien il faudra disposer de nombreux ou importants dispositifs de compensation de dilatation.

On voit de plus que la pompe 12 se trouve placée dans de mauvaises conditions hydrauliques d'aspiration : elle dispose d'un faible coefficient NPSH. Pour éviter qu'elle ne cavite, on est conduit à adopter une faible vitesse de rotation, donc une roue de grand diamètre et un moteur d'entraînement lent. L'ensemble est coûteux, car on sait que le prix d'une pompe croît comme le carré du diamètre.

En outre, l'ensemble constitué par la motopompe et le réservoir d'expansion est lourd. Etant haut placé dans l'installation, il nécessite un supportage important notamment pour s'affranchir des sollicitations séismiques éventuelles qui tendent à croître avec l'éloignement du niveau du sol. Dans ces conditions, il n'est pas étonnant de constater que dans divers projets de centrales à neutrons rapides, le coût de l'ensemble motopompe, réservoir d'expansion, et leur supportage représente une fraction significative du coût de l'ensemble de la chaudière.

En conclusion, le coût d'investissement et d'exploitation d'une boucle secondaire selon l'art antérieur décrit est défavorablement influencé par un certain nombre de facteurs liés à la conception habituelle de ces boucles.

En résumé, les inconvénients majeurs sont les suivants :

— la pompe est en point haut, elle a un mauvais NPSH, elle tourne lentement, elle est donc lourde et coûteuse ;

— le réservoir d'expansion où l'on implante habituellement la pompe est lourd et volumineux ;

— les deux ensembles précédents, haut placés, conduisent à des charpentes de supportage coûteuses (problème du séisme notamment) ;

— le réseau de tuyauteries est étendu par suite de l'existence de trois points fixes à relier entre eux et laissant peu de degrés de liberté pour les rapprocher ;

— la production contre la réaction sodium-eau se fait uniquement par des membranes de rupture coûteuses et présentant des servitudes de sûreté (évacuation de la puissance résiduelle du réacteur en cas de rupture intempestive) et d'entretien (changement périodique). Elle n'est pas parfaite (mouvements oscillatoires du sodium) ;

— présence de vannes et tuyauteries de vidange de gros diamètre, coûteuse et sources de pannes possibles (fuites du clapet) ;

— présence de tuyauteries diverses pour assurer plusieurs fonctions liées aux servitudes précédentes : remplissage, trop-plein, équilibrage des niveaux, etc. ;

— incidence désavantageuse des facteurs précédents sur le volume de sodium de la boucle et, par conséquent, sur la taille des réservoirs de sodium qui sont au nombre minimum de deux (expansion, stockage) ;

— incidence désavantageuse aussi de l'ensemble sur l'appareillage électrique de préchauffage des tuyauteries et des réservoirs et sur le contrôle-commande.

D'autre part, le FR-A-2 321 750, qui concerne l'intégration de la pompe d'une boucle secondaire dans le générateur de vapeur, montre qu'il est possible de prévoir un volume d'expansion supérieur et un réservoir inférieur. Toutefois, ce réservoir sert uniquement à récupérer d'éventuels produits résultant d'une réaction sodium-eau.

La présente invention a précisément pour objet une boucle secondaire de refroidissement pour réacteurs nucléaires à neutrons rapides refroidis par un métal liquide (sodium) ou mélange de sels de métaux liquides du même type qui pallie les inconvénients cités ci-dessus ou qui du moins les diminue sensiblement.

Ce problème est résolu par un circuit caloporteur secondaire pour un réacteur nucléaire du type refroidi par un métal liquide, ledit circuit comprenant au moins un échangeur intermédiaire logé dans la cuve dudit réacteur, un générateur de vapeur extérieur à ladite cuve pour l'échange de calories entre le métal liquide secondaire circulant dans ledit circuit secondaire et de l'eau-vapeur, au moins une pompe de circulation dudit métal liquide secondaire et un réservoir de stockage dudit métal liquide secondaire et de récupération des produits créés par une éventuelle réaction métal liquide-eau dans ledit générateur de vapeur, ledit métal liquide étant susceptible d'occuper un niveau minimal dans ledit réservoir, ledit réservoir étant placé au niveau le plus bas de l'installation nucléaire, caractérisé en ce que l'extrémité inférieure de la conduite de sortie de métal liquide dudit générateur de vapeur plonge directement dans ledit réservoir, en ce qu'est maintenue dans ledit réservoir au-dessus du métal liquide une couverture de gaz inerte à une pression telle qu'elle équilibre la pression de métal liquide dans la totalité de ladite boucle secondaire, ledit réservoir jouant ainsi en plus le rôle de réservoir anti-bélier aval pour ledit générateur de vapeur et de réservoir d'expansion lors des variations de température dudit métal liquide et en ce que ladite pompe comportant un rotor, ce rotor est situé au-dessus dudit niveau minimal.

On voit qu'ainsi la récupération des produits de réaction sodium-eau peut se faire directement sans que des membranes soient strictement nécessaires et que de plus ⲉ réservoir de stockage joue également le rôle ⲉ réservoir anti-bélier aval pour le générateur ⲅⲉ vapeur, ce qui supprime ainsi un réservoir de volume important dans la boucle secondaire.

Selon un mode préféré de mise en œuvre, la pompe de circulation est d'un type quelconque et l'entrée de ladite pompe est branchée sur la conduite de sortie dudit générateur de vapeur en amont dudit réservoir, alors que la sortie de ladite pompe est directement raccordée à l'échangeur intermédiaire ou auxdits échangeurs intermédiaires, ladite pompe étant extérieure audit réservoir.

On voit qu'ainsi la pompe ne plonge pas dans le réservoir. On voit de plus que le circuit secondaire ne passe pas à proprement parler par le réservoir de stockage. Le sodium va directement de l'échangeur à la pompe. Cependant, ce circuit est en communication avec le réservoir. Le réservoir joue donc bien son rôle « anti-bélier » mais il n'y a pas normalement de circulation de sodium dans le réservoir.

Selon un deuxième mode de mise en œuvre, la pompe de circulation est du type à niveau libre, ladite pompe est logée dans ledit réservoir, l'entrée de la pompe plongeant directement dans le métal liquide contenu dans ledit réservoir, la sortie de ladite pompe étant directement reliée au ou à chacun desdits échangeurs intermédiaires.

Selon un troisième mode de mise en œuvre, ladite pompe est du type électromagnétique ou à « joint gelé », ladite pompe est logée immédiatement au-dessus dudit réservoir, la conduite d'entrée de la pompe plongeant dans le métal liquide dudit réservoir, la conduite de sortie étant directement reliée à l'échangeur intermédiaire ou auxdits échangeurs intermédiaires.

Selon un quatrième mode de mise en œuvre, la pompe est intégrée audit générateur de vapeur et disposée à la partie supérieure de son enveloppe, ledit générateur de vapeur comportant une cheminée centrale dans laquelle circule le métal secondaire après avoir traversé le faisceau d'échange, ladite cheminée centrale constituant la conduite d'entrée de ladite pompe, la sortie de ladite pompe étant directement raccordée audit échangeur intermédiaire ou auxdits échangeurs intermédiaires.

On voit donc que dans ce cas, à nouveau, il n'y a pas circulation de métal liquide dans le réservoir de stockage.

Cependant, lorsque la pompe de circulation est du type mécanique à niveau, il se pose des problèmes particuliers dans le cas où cette pompe viendrait à s'arrêter de façon volontaire ou intempestive. Il s'agit plus précisément du problème de l'introduction du gaz de couverture dans le circuit de sodium lors du désamorçage de ce type de pompe. Ce problème se présente même dans le cas où la pompe est logée dans le réservoir de stockage du fait qu'on utilise une pompe à arbre court, c'est-à-dire que le rotor ou la roue de la pompe mécanique est situé au-dessus du niveau minimal de sodium dans le réservoir.

Pour mieux faire comprendre ce problème, on a représenté sur la figure 3' une pompe mécanique à niveau libre.

Cette figure a essentiellement pour objet de montrer les différents types de fuites fonctionnelles de sodium qui se produisent dans une telle pompe.

On trouve une virole de support 120 qui traverse la paroi du réservoir de stockage 24' et qui est fermée par un couvercle 122 muni d'une garniture d'étanchéité 12'a pour l'arbre de pompe 12''a (cette garniture localisée en 12'a sur la figure 1 n'est pas représentée sur la figure 2). La virole 120 supporte la volute de pompe 126 munie de ses orifices de refoulement 128 qui sont raccordés à la ou les conduites 10' de la figure 1. La pompe 12' comporte également un orifice axial d'aspiration de sodium 130 qui est raccordé à la conduite d'aspiration 130' plongeant dans le réservoir 24' en dessous du niveau de sodium le plus bas $N_2$. A l'extrémité inférieure de l'arbre 12''a, on trouve la roue 132 de la pompe. Autour de la roue 132, on trouve le diffuseur 134 qui est solidaire d'un corps de pompe 136. L'arbre de pompe 12''a traverse ce corps 136 par un palier hydrostatique symbolisé par la référence 138. Au voisinage du palier 138, on trouve la chambre 140 d'alimentation de ce palier, et une chambre 140' où débouche une fraction du débit en provenance du palier hydrostatique (l'autre fraction étant dirigée vers l'ouïe d'aspiration de la pompe par des orifices percés dans le flasque supérieur de la roue). Pour assurer une certaine étanchéité, on trouve des joints à labyrinthes ou à segments ajustés 142 entre le corps 136 et la tubulure d'aspiration de sodium 130', entre ce corps 136 et la virole support 120. Ces dispositifs de semi-étanchéité ont pour objet de limiter les fuites référencées $F_1$ entre les parties statiques 136 de la pompe et la virole support 120, afin de permettre un démontage aisé par le haut de tout l'ensemble constitué par le corps de pompe 136, la roue 132 et l'arbre 12''a. D'autres joints à labyrinthes ou à bagues d'étanchéité ajustées sont disposés respectivement entre le corps 136 et la roue 132 de la pompe. Les fuites correspondantes sont symbolisées par les flèches F₂. Enfin, on trouve des fuites symbolisées par les flèches F₃ et qui correspondent à l'alimentation et à la restitution du palier hydrostatique 138.

Il faut préciser en outre que la virole 120 de supportage du corps de pompe comporte des évents supérieurs 146 pour assurer l'équilibrage des pressions d'argon entre l'intérieur de cette virole 120 et l'extérieur de cette virole, ces évents 146 étant disposés au-dessus du niveau maximal N₃ du sodium dans le réservoir 24' et éventuellement une deuxième série d'évents 148 pour assurer l'équilibrage des niveaux de sodium entre l'intérieur et l'extérieur de la virole 120, cette deuxième série d'évents 148 étant avantageusement disposée en dessous du niveau maximal de sodium N₃.

On comprend que lorsque l'arbre de la pompe est suffisamment long, compte tenu de la hauteur du réservoir de stockage pour que la roue de la pompe soit en dessous du niveau inférieur de sodium, les fuites fonctionnelles ne présentent aucun inconvénient particulier. En revanche, lorsque l'arbre de pompe est aussi court que possible (roue au-dessus du niveau inférieur) ce qui est le cas de l'invention et lorsque la pompe s'arrête intempestivement ou ralentit en deçà d'une vitesse déterminée, certaines de ces fuites fonctionnelles cessent d'éjecter du sodium, et au contraire, s'inversent pour faire pénétrer de l'argon à l'intérieur du corps de pompe, puis, de ce corps vers la boucle elle-même. Si l'arrêt se maintient, la pompe sera désamorcée et, progressivement même, la boucle pourra se vidanger. Il en est de même lorsque la pompe mécanique est à l'extérieur du réservoir.

Il est possible que l'on puisse parfaitement tolérer cet inconvénient qui n'affecte pas le fonctionnement normal de l'installation, mais crée simplement des complications supplémentaires lors d'incidents tels que celui de l'arrêt intempestif de la pompe. Cet inconvénient constitue néanmoins une sujétion d'exploitation qui n'existe pas avec un circuit habituel. En outre, elle peut présenter certains risques vis-à-vis de la sûreté de l'installation, notamment si l'on utilise en toutes circonstances les boucles secondaires pour évacuer la puissance résiduelle du réacteur, comme c'est l'usage dans différents projets de centrales à neutrons rapides.

Le moyen le plus simple d'y remédier sans modification du principe de base du circuit secondaire selon l'invention, consiste à dimensionner largement le circuit d'argon : après arrêt intempestif de la pompe à mesure que les bulles d'argon pénètrent dans la boucle et remontent par gravité à la poche d'argon du générateur de vapeur, provoquant ainsi la vidange progressive du sodium du circuit secondaire, la régulation de niveau de la poche d'argon du générateur commande une admission équivalente d'argon dans le réservoir de stockage qui compense ainsi constamment le débit qui s'échappe de ce réservoir. L'inconvénient de ce procédé tient surtout aux conséquences néfastes d'une circulation permanente d'argon dans un tel système. En effet, l'expérience d'exploitation de nombreux circuits de sodium liquide et des circuits d'argon associés montre que l'on doit proscrire au maximum les transferts d'argon chaud, chargé de vapeur et aérosols de sodium, car il en résulte de fréquents engorgements et bouchages des tuyauteries et appareils traversés par ces débits de gaz. Une règle de l'art consiste donc à limiter au strict nécessaire les mouvements d'argon.

Une solution pour résoudre ce problème consisterait à utiliser une pompe à arbre long, c'est-à-dire que la roue de pompe est disposée en dessous du niveau minimal de sodium dans le réservoir de stockage malgré la hauteur de celui-ci. Ainsi, les problèmes évoqués précédemment ne se posent plus. Avec une telle disposition, le fonctionnement de la pompe ne pose plus aucun problème par rapport à ceux que l'on rencontre dans les circuits secondaires habituels. En contrepartie, avec une telle solution, le profit que l'on peut retirer du fait de disposer d'un coefficient NPSH de grande valeur peut être partiellement ou totalement effacé par l'accroissement du coût provenant de l'allongement très sensible de l'arbre de la pompe par rapport aux dispositions habituelles et par le surcoût lié aux impératifs du maintien d'une garde suffisante de sodium dans le fond du réservoir pour noyer la pompe. Cette solution est donc rejetée selon l'invention.

C'est pourquoi, selon la présente invention, on peut prévoir des perfectionnements liés à l'implantation des pompes à arbre court dans le réservoir de stockage ou au cas de pompes à niveau libre extérieures au réservoir de stockage qui permet de s'affranchir des problèmes de dénoyage de la pompe, même en cas d'arrêt de celle-ci, sans entraîner une complication sensible de ce circuit.

Selon ces perfectionnements, le circuit secondaire dans lequel le métal liquide occupe dans le réservoir de stockage un niveau inférieur lorsque ledit circuit secondaire est rempli dudit métal liquide et un niveau supérieur lorsque ledit circuit secondaire est vide, se caractérise alors en ce que la roue de ladite pompe mécanique est montée au bout de son arbre à un niveau intermédiaire entre ledit niveau inférieur et ledit niveau supérieur, en ce que ladite conduite d'aspiration de la pompe débouche en dessous dudit niveau inférieur et en ce que ladite pompe est munie de moyens de protection lorsque le métal liquide occupe ledit niveau inférieur pour empêcher le passage du gaz surmontant ledit métal liquide dans la conduite de refoulement de ladite pompe en cas d'arrêt intempestif de celle-ci.

Selon un premier mode de mise en œuvre, lesdits moyens de protection consistent dans le fait que ladite conduite de refoulement est coudée et présente un point bas dans ledit réservoir de stockage qui est situé en dessous du niveau inférieur.

Selon un deuxième mode de mise en œuvre, le circuit secondaire comprenant un circuit annexe, de préférence, de purification muni d'une pompe propre dans lequel circule du métal liquide, l'entrée dudit circuit (annexe de purification) débouchant dans le réservoir de stockage en dessous du niveau inférieur, se caractérise en ce que les moyens de protection consistent en ce que la sortie dudit circuit annexe débouche dans le corps de pompe au-dessus de ladite roue, le débit dudit circuit de purification étant supérieur au débit des fuites fonctionnelles de ladite pompe, lorsque celle-ci est à l'arrêt.

Bien entendu, on peut combiner ces deux types de protection.

Selon un autre mode de réalisation du perfectionnement applicable aux deux montages des pompes mécaniques (intérieures ou extérieures au réservoir de stockage), le système pour éviter l'introduction de bulles de gaz consiste en ce que la ou lesdites conduites de refoulement reliant la sortie de ladite pompe audit échangeur intermédiaire comporte un point haut, la portion de ladite conduite entre la sortie de la pompe et ledit point haut présente une pente suffisante et convenablement orientée pour que les bulles de gaz susceptibles de pénétrer dans ladite pompe puissent s'échapper et remonter par gravité jusqu'audit point haut, en ce que ledit point haut est muni d'un évent permettant l'évacuation desdites bulles et en ce qu'il comprend des moyens pour introduire une quantité équivalente de gaz dans ledit réservoir pour maintenir ladite pression.

Bien entendu, dans le cas où les pompes sont logées dans le réservoir de stockage, ce moyen de protection peut se combiner aux moyens de protection précédemment décrits.

De toutes façons, l'invention sera mieux comprise à la lecture de la description qui suit de plusieurs modes de réalisation de l'invention donnés à titre d'exemples non limitatifs. La description se réfère aux figures annexées sur lesquelles on a représenté :

— sur les figures 1 à 3 déjà décrites, une boucle secondaire selon l'art antérieur pour un réacteur nucléaire refroidi par du sodium liquide ;

— sur la figure 4a, une vue simplifiée de la boucle secondaire selon l'invention, montrant les éléments principaux de celle-ci ;

— sur les figures 4b et 4c, des variantes de réalisation du réservoir anti-coup de bélier amont ;

— sur la figure 4d, une vue de la boucle secondaire montrant l'implantation concrète de celle-ci ;

— sur la figure 5a, une demi-vue en coupe longitudinale d'une pompe secondaire à « joint gelé » ;

— sur les figures 5b à 5d, des vues partielles illustrant des variantes de montage de la pompe secondaire ;

— sur les figures 6a à 6d, des vues montrant divers modes de réalisation du générateur de vapeur ;

— sur la figure 7, une vue montrant les circuits d'argon pour le réglage des niveaux de sodium ;

— sur la figure 8, une vue partielle de la boucle secondaire montrant une variante de réalisation selon laquelle on utilise un bloc pompe-échangeur intégré ;

— sur les figures 9a et 9b, des vues partielles de la boucle secondaire de refroidissement montrant deux modes de réalisation du circuit de refroidissement de secours ; et

— sur la figure 10, une vue partielle de la boucle secondaire montrant une variante de réalisation selon laquelle le générateur de vapeur est directement supporté par le réservoir de stockage ;

— sur la figure 11, une vue en coupe verticale de l'implantation d'une pompe mécanique montrant le premier mode de protection vis-à-vis des remontées de bulles de gaz ;

— sur la figure 12, une vue en coupe verticale de l'implantation d'une pompe mécanique montrant le deuxième mode de protection vis-à-vis des remontées de bulles de gaz ; et

— sur la figure 13, une vue simplifiée d'un troisième mode de protection vis-à-vis des remontées de bulles de gaz, dans le cas particulier où la pompe est extérieure au réservoir de stockage.

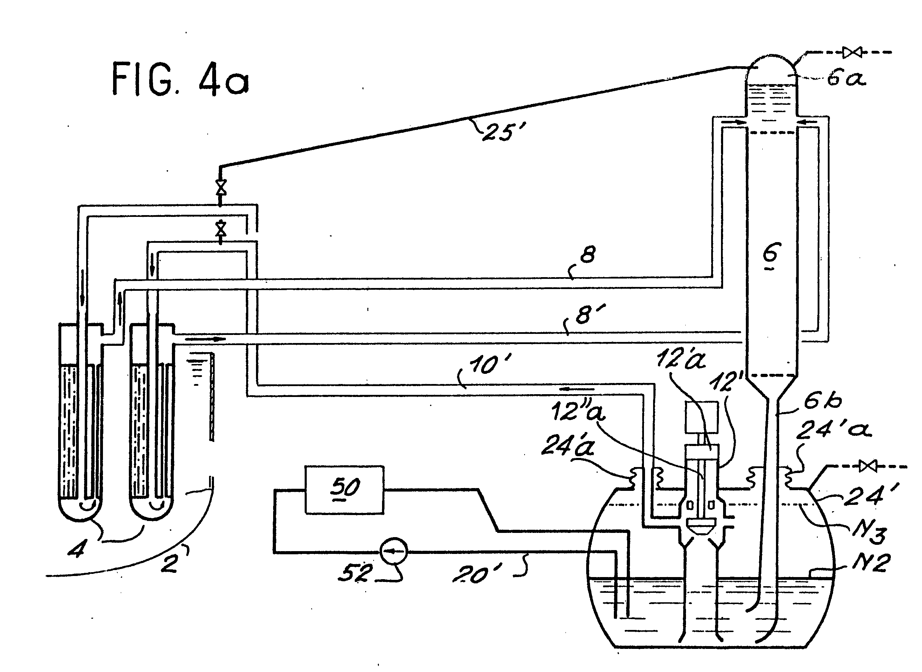

Sur la figure 4a, on a représenté de façon simplifiée la boucle secondaire selon l'invention. On retrouve la cuve 2 du réacteur avec ses échangeurs intermédiaires 4, son générateur de vapeur 6 relié aux échangeurs intermédiaires par les canalisations 8 et 8'. Le générateur de vapeur 6 est surmonté par sa poche d'argon 6a comme sur la figure 1. On retrouve également le réservoir de stockage 24' mais sous une forme modifiée. On retrouve également la canalisation 10' correspondant à la canalisation 10 qui relie la pompe de circulation 12' à l'entrée des échangeurs intermédiaires 4. Par rapport à la figure 1 correspondant à l'art antérieur, il est important de noter que la tubulure de sortie 6b du générateur de vapeur 6 débouche directement dans le réservoir 24' et que la pompe 12' qui est dans ce cas du type à surface libre est montée dans le réservoir 24'. Ce réservoir repose sur le sol et constitue donc le point le plus bas de l'installation nucléaire. Ainsi, la pompe 12' est disposée en un point bas de l'installation. En outre, un circuit 20' permet la purification du sodium par prélèvement partiel de celui-ci. Ce circuit 20' comprend essentiellement un ensemble de purification de type connu 50 et une pompe de reprise 52, généralement du type électromagnétique.

La figure 4a représente ainsi une boucle secondaire avec une pompe 12' à surface libre implantée en point bas dans un grand réservoir 24' jouant le rôle de stockage (à l'arrêt de la boucle) d'expansion (pour tout régime de fonctionnement), de réservoir anti-bélier aval, et de réservoir récupérateur des produits d'une réaction sodium-eau éventuelle. On supprime plusieurs réservoirs du système habituel en les remplaçant par un seul réservoir, d'ailleurs placé en point bas. La pompe 12' aspire le sodium de ce réservoir et le refoule dans les échangeurs 4. Le sodium pénètre alors à l'extrémité supérieure du générateur où l'on a ménagé la présence d'une poche d'argon 6a. De ce point, le sodium descend à travers le faisceau tubulaire. A la sortie du générateur, le sodium est renvoyé au réservoir unique 24' de stockage-expansion-récupération, par une canalisation 6b aussi courte que possible et aussi verticale que possible pour favoriser la vidange rapide et notamment celle du sodium pollué de soude en cas de réaction sodium-eau, et pour réduire la hauteur du système.

Pour compenser les dilatations des tuyauteries entre la pompe et la paroi du réservoir et entre le générateur de vapeur et le réservoir, on peut disposer des compensateurs de dilatation 24'a aux endroits indiqués. Pour des raisons propres à la technologie du sodium, ces compensateurs 24'a sont généralement à soufflets métalliques. En les plaçant en argon et non au contact direct du sodium, comme l'autorise la disposition des boucles secondaires selon l'invention, on évite toutes les difficultés habituelles d'emploi de ces dispositifs d'étanchéité quand ils sont mis au contact du sodium. Ils sont placés de manière très fiable et sûre : leur rupture éventuelle ne provoque pas de fuite de sodium à l'extérieur. En effet, le réservoir de stockage est dimensionné pour contenir tout le sodium de la boucle, à la température maximale envisageable et en conservant au-dessus de la surface libre $N_3$ une poche d'argon suffisante pour éviter :

1. le noyage de la garniture de la pompe 12'a,

2. le noyage des compensateurs de dilatation 24'a s'ils existent.

Pour que le système fonctionne, il faut que la pression d'argon dans le réservoir 24' compense la hauteur de sodium contenu dans les tuyauteries de la boucle et dans le générateur de vapeur. A débit nul du sodium, la pression absolue d'argon du réservoir est donc égale à la pression régnant dans la poche 6a du générateur (on a vu précédemment qu'elle doit être à peine supérieure à la pression atmosphérique) augmentée de la pression équivalente à la hauteur du sodium dans la boucle en prenant pour référence l'altitude de la surface libre dans le réservoir de stockage. Sur la base de la plupart des projets connus de générateur, on peut prévoir que cette hauteur de sodium ne dépasse pas ou est voisine d'une trentaine de mètres : c'est une pression modérée et parfaitement compatible avec la réglementation des appareils à pression de gaz qui régit, en France, ce type de circuit. Lorsque la pompe est en fonctionnement, on voit que la pression de l'argon dans le réservoir est plus faible, car elle est diminuée alors de la perte de charge du sodium à la traversée du générateur de vapeur (perte de charge dont l'ordre de grandeur est, par exemple, de 1 bar). Il en résulte alors que la pression régnant dans l'argon du réservoir est encore plus faible que lorsque la boucle est pleine et à l'arrêt. Mais cette pression reste suffisamment élevée pour créer à l'entrée de la pompe un coefficient NPSH élevé par exemple de l'ordre de 2 à 3 bar absolu. Cette valeur est sensiblement plus forte que celle que l'on obtient dans le système de l'art antérieur (figure 1) où la pompe est au point haut (1 à 1,3 bar par exemple). Un gain substantiel peut être obtenu sur la vitesse de rotation de la pompe donc sur son coût.

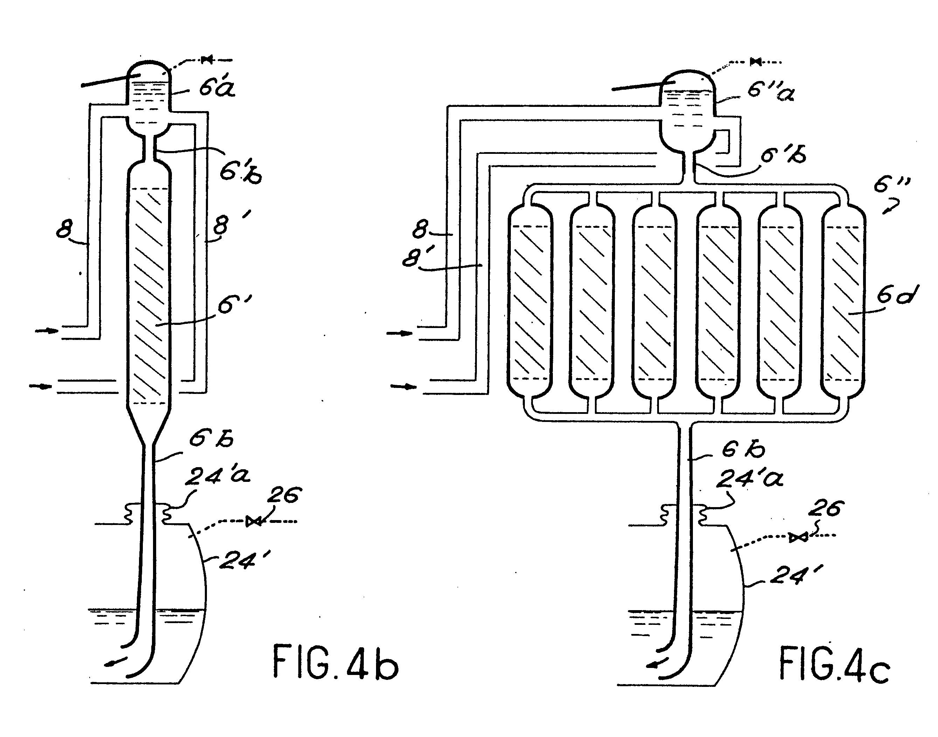

Sur les figures 4b et 4c, on a représenté des variantes de réalisation du générateur de vapeur 6. Sur la figure 4b, dans le générateur de vapeur 6', la cloche d'argon 6'a est séparée de l'enveloppe externe du générateur de vapeur et raccordée à l'entrée de celui-ci par une conduite 6'b. Par ailleurs, le générateur de vapeur est identique à celui de la figure 4a. Sur la figure 4c, le générateur de vapeur qui est alors référencé 6" est du type modulaire. On retrouve la poche d'argon séparée 6"a, mais l'échangeur de chaleur proprement dit est constitué par plusieurs modules 6d montés en parallèle. En d'autres termes, les entrées des modules d'échange sont toutes raccordées à la canalisation 6'b et les sorties sont raccordées à la canalisation 6b. Par ailleurs, l'ensemble du dispositif est identique.

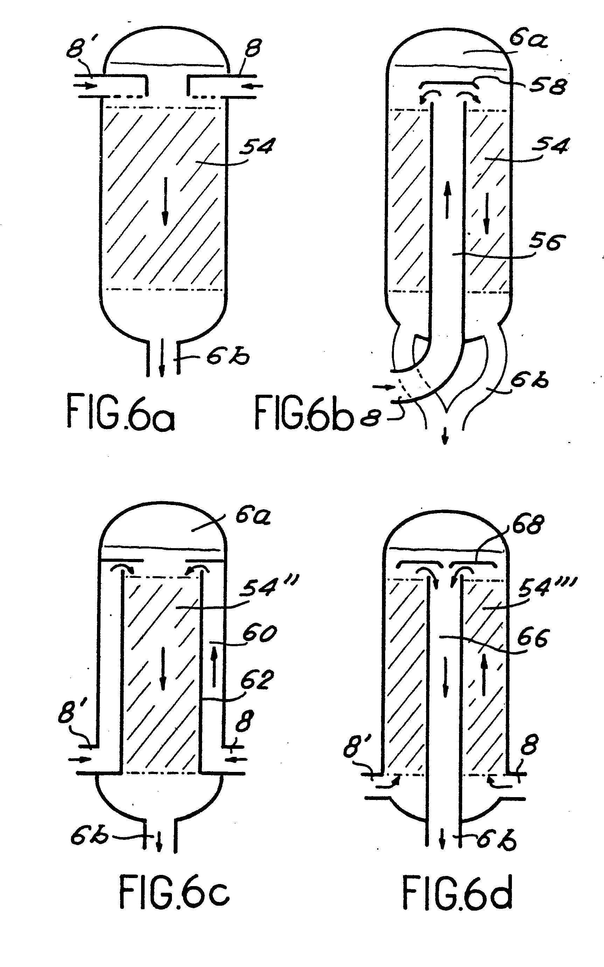

Sur les figures 6a à 6d, on a représenté divers modes de circulation du sodium secondaire dans le générateur de vapeur 6 ou dans un des modules d'échange de ce générateur de vapeur. Sur la figure 6a, on retrouve la disposition décrite déjà dans la figure 4b. En d'autres termes, les tubulures d'entrée du sodium secondaire sont disposées à la partie supérieure de l'enveloppe externe du générateur de vapeur, ce sodium secondaire traverse de haut en bas l'ensemble des tubes d'échange contenant l'eau, ces tubes, symbolisés par la section hachurée 54, occupant la totalité de la section droite de l'échangeur de chaleur. La sortie du sodium secondaire refroidi se fait par la tubulure 6b. Dans le cas de la figure 6b, l'enveloppe externe du générateur de vapeur comporte une cheminée centrale 56 qui est raccordée à la tubulure d'entrée 8. Un déflecteur 58 dirige le sodium secondaire vers l'espace annulaire 54' comportant les tubes d'échange dans lesquels circule l'eau. La sortie du sodium secondaire froid se fait par raccordement à la tubulure de sortie 6b. On a donc ainsi encore une circulation de haut en bas du sodium secondaire.

Sur la figure 6c, le sodium entre à la partie basse de l'enveloppe externe de l'échangeur. Il circule tout d'abord dans un espace annulaire 60 ménagé entre l'enveloppe externe et un baffle 62 à l'intérieur duquel est disposé l'ensemble des tubes d'échange 54". Des déflecteurs 64 dirigent la circulation de sodium vers la partie supérieure du faisceau de tubes d'échange 54". La sortie du sodium secondaire froid se fait par la tubulure de sortie 6b.

Sur la figure 6d, le sodium secondaire chaud entre à la partie inférieure du générateur de vapeur par les conduites 8 et 8'. Il traverse le faisceau de tubes d'échange 54" qui est alors annulaire autour d'une cheminée centrale d'évacuation 66. Après avoir traversé les faisceaux d'échange, le sodium secondaire est dirigé vers la cheminée 66 par les déflecteurs 68. La cheminée 66 est raccordée à la tubulure de sortie 6b.

Bien entendu, sur la figure 4a, on pourrait remplacer le générateur de vapeur 6 par n'importe lequel des générateurs de vapeur des figures 6b à 6d. De même, on peut combiner les divers modes de réalisation des figures 6a à 6b avec les modes de réalisation des figures 4b et 4c sans sortir de l'invention.

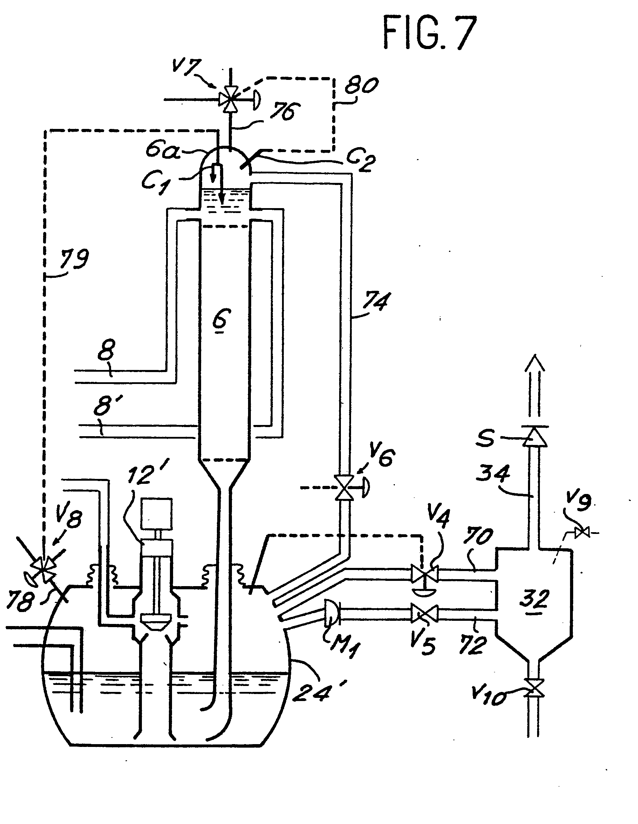

Sur la figure 7, on a représenté les circuits d'argon ou plus généralement de gaz inerte permettant de régler les niveaux de sodium dans les différents réservoirs intervenant dans la boucle secondaire. On trouve tout d'abord une canalisation 70 de décompression rapide qui relie le réservoir 24' au séparateur 32. Cette canalisation a un grand diamètre et une pente dirigée vers le stockage. La température est régulée jusqu'à son débouché dans le séparateur 32. Cette canalisation est munie d'une vanne $V_4$ de décompression rapide à ouverture commandée ou automatique lorsque la pression dans le réservoir 24' dépasse une valeur de consigne. On trouve également la conduite 72 de décompression rapide de secours, de grand diamètre et présentant également une pente vers le réservoir de stockage, cette conduite reliant le réservoir 24' au séparateur 32. La température est régulée jusqu'à la membrane d'éclatement $M_1$. On trouve enfin la conduite 74 qui assure l'équilibrage de pression d'argon entre la poche 6a du générateur de vapeur et le réservoir 24'. Cette conduite 74 a un grand diamètre et une pente constante vers le réservoir pour le retour du condensat. La température est régulée en permanence à une température de 150 °C environ. Il faut ajouter que la conduite 72 peut, de préférence, comporter une vanne $V_5$ qui est maintenue ouverte par verrouillage en fonctionnement normal et qui est fermée à la suite de la rupture de la membrane $M_1$ pour éviter une entrée d'air dans le circuit. La membrane $M_1$ de rupture de secours montée sur la canalisation 72 a une pression de rupture qui est supérieure à la pression d'ouverture automatique de la vanne $V_4$ montée sur la conduite 70. La vanne $V_6$ d'équilibrage de pression entre le réservoir de stockage et la poche 6a du générateur de vapeur est commandée éventuellement automatiquement lorsque la vanne $V_4$ étant ouverte, la pression dans le réservoir de stockage est voisine de la pression dans la poche d'argon 6a.

A la partie supérieure de la poche d'argon 6a, on trouve une conduite d'arrivée d'argon 76 qui débouche dans la poche 6a par l'intermédiaire d'une vanne à trois voies $V_7$. Par la manœuvre de cette vanne qui est commandée ou qui est automatique, on régule la pression dans la poche d'argon 6a. Une autre vanne $V_8$ montée sur la canalisation 78, pour l'introduction d'argon dans le réservoir de stockage 24', permet de réguler le niveau de sodium dans la poche d'argon 6a. La vanne $V_9$ permet de régler l'admission d'argon dans le séparateur 32 pour réguler la pression d'argon dans ce réservoir. La vanne $V_{10}$ permet un soutirage éventuel du sodium plus ou moins oxydé prélevé dans le réservoir séparateur 32. Sur la cheminée 34, on trouve une soupape S de grande section de passage et de faible pression de tarage, par exemple de l'ordre de 0,05 bar à 0,1 bar relatif. Sur cette figure, on a représenté par $C_1$ un capteur monté dans la poche d'argon 6a qui permet de déterminer le niveau de sodium dans cette poche d'argon et de commander ainsi par la liaison d'asservissement 79 la vanne $V_8$. Enfin, on a représenté par $C_2$ un capteur de pression dans la poche d'argon 6a qui permet d'asservir par la liaison d'asservissement 80 la vanne $V_7$.

Ces différents circuits d'argon remplissent les fonctions suivantes :

1. remplissage de la boucle secondaire en sodium à partir du réservoir de stockage 24' : la vanne $V_6$ est fermée la régulation de pression (1,1 bar par exempl: 'u haut du générateur est en fonctionnement. la vanne $V_8$, on pressurise le stockage, ce provoque, par contre-pression, la montée du sodium dans la boucle. Quand le niveau repéré par $C_1$ est atteint dans le générateur de vapeur, la régulation de niveau agit sur la vanne $V_8$ pour maintenir le niveau dans le générateur. La vanne $V_7$ continue, quant à elle, à régler la pression de la poche d'argon 6a à 1,1 bar, par exemple.

2. mise en route de la pompe 12', fonctionnement en charge ou à charge partielle : dès que la pompe se met en route (mise en route généralement progressive car ce type de pompe est entraîné, pour d'autres raisons, par un moteur à vitesse variable), le niveau tend à varier dans le générateur de vapeur : la régulation du niveau agit sur la vanne $V_8$ en conséquence, notamment pour qu'au régime nominal la pression dans le stockage soit réduite de la valeur correspondant à la perte de charge dans le générateur de vapeur.

3. vidange normale : la pompe étant arrêtée, on inhibe la régulation du niveau et on ouvre progressivement la vanne $V_6$ : les pressions tendent à s'équilibrer entre le réservoir de stockage et la poche 6a du générateur et, par conséquent le niveau de sodium dans la boucle décroît à mesure que le sodium revient dans le réservoir de stockage et que l'argon du stockage le remplace dans la partie haute. La régulation due à la vanne $V_7$ par rejet d'argon, agit en sorte que, en fin de vidange, la pression s'établisse partout à 1,1 bar, par exemple, ou à toute autre valeur choisie volontairement.

4. vidange rapide (à cause d'une fuite de sodium sur la boucle, par exemple) : les deux vannes $V_4$ et $V_6$ sont ouvertes en grand. Par la vanne $V_4$, on décomprime rapidement le réservoir de stockage, par la vanne $V_6$, on équilibre rapidement les pressions dans l'installation, ce qui assure la vidange rapide du sodium dans le réservoir de stockage 24'.

5. réaction sodium-eau : la bulle d'hydrogène qui se développe dans le générateur de vapeur tend à repousser le sodium de part et d'autre : la poche d'argon du générateur se comprime conformément à sa fonction de tampon antibélier, la poche d'argon du réservoir de stockage aussi. Mais en raison de la grande capacité du réservoir de stockage 24', la pression y varie lentement. Très rapidement, la bulle d'hydrogène, en se développant provoque la vidange par le bas de tout le sodium du générateur de vapeur situé à une altitude inférieure à la fuite. A partir de ce moment, la vapeur d'eau et l'hydrogène arrivant du générateur de vapeur débouchent directement dans le réservoir de stockage : il n'y a plus véritablement d'effet de coups de bélier, mais une montée progressive en pression de gaz du système. Pour limiter cette montée en pression, on peut agir de plusieurs manières échelonnées dans le temps ou de façon simultanée :

a) les détecteurs spécifiques de fuite (mesure du bruit, mesure de l'hydrogène présent dans le sodium ou dans l'argon de la poche 6a ou de celle du réservoir 24' donnent l'alarme et permettent d'ouvrir très tôt la vanne $V_4$ pour décomprimer le système. Ils permettent aussi de décomprimer, par des soupapes appropriées le circuit d'eau vapeur et d'isoler le générateur de vapeur à l'entrée d'eau et à la sortie de vapeur, selon un processus habituel.

b) des capteurs de pression, de niveaux, de débits donnent par la corrélation de leurs indications, l'alarme et provoquent les mêmes manœuvres.

c) la pression dans le réservoir de stockage atteint une valeur prédéterminée qui provoque automatiquement l'ouverture de la vanne $V_4$ (ce qui revient à dire que la vanne $V_4$ a la fonction d'une soupape de sûreté).

d) en ultime secours, on peut prévoir la membrane d'éclatement $M_1$ sur l'argon du réservoir de stockage 24'. Si aucun des dispositifs précédents ne fonctionnait, elle se romprait en dernier ressort. La vanne $V_5$, toujours maintenue ouverte normalement (par verrouillage par exemple), permettrait alors, par fermeture volontaire après l'incident, d'éviter une rentrée d'air.

Le circuit d'argon représenté sur la figure 7 est donné à titre indicatif. En particulier, on pourrait imaginer d'autres dispositions plus simples ou plus complexes réalisant les mêmes fonctions. Il n'est par représenté non plus dans sa totalité, par exemple pour ce qui correspond à l'appareillage de stockage de l'argon d'appoint ou pour ce qui correspondrait à un système de recyclage de l'argon afin d'en réduire la consommation. Ces dispositifs ne sont pas spécifiques de la boucle selon l'invention.

Sur la figure 4d, on a représenté un mode concret d'implantation de la boucle secondaire selon l'invention telle qu'elle est définie sur la figure 4a. On a bien sûr gardé les mêmes références. Cette figure 4d qui est tracée à la même échelle que la figure 3 montre très clairement le gain de place que permet l'invention par rapport au circuit de l'art antérieur.

De plus, le système de vidange est considérablement simplifié puisqu'il ne comprend comme conduites supplémentaires que les purges ou évents 25' situés à la partie haute des liaisons entre l'échangeur intermédiaire et la pompe et pouvant se raccorder aisément à la poche d'argon 6a. Il convient que les conduites soient implantées avec une certaine pente (de l'ordre de 3 à 5 %) et que celles-ci soient convenablement orientées. On peut remarquer en plus que sur la figure 4d, on a choisi pour les pentes un sens qui permet de vidanger la presque totalité de l'échangeur intermédiaire par siphonnage, ce que ne permettait pas l'art antérieur.

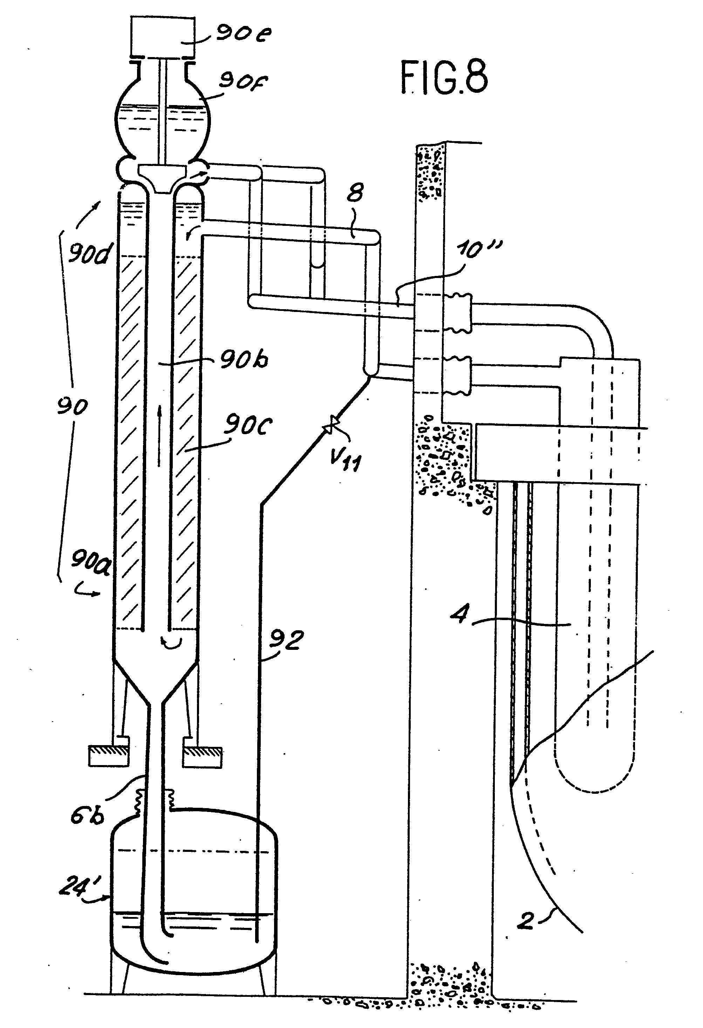

Sur la figure 8, on a représenté une variante de réalisation de la boucle secondaire. Selon cette variante, on utilise un bloc pompe-échangeur intégré 90. La partie échangeur 90a comporte la cheminée centrale 90b et le faisceau annulaire de tube d'échange 90c. La partie pompe 90d comprend la pompe 90e proprement dite à niveau libre avec son réservoir d'expansion 90f. Le sodium secondaire entre par la conduite 8 dans l'échangeur 90a et sort de la pompe 90d par la conduite 10". On voit cependant qu'on retrouve le même principe de circuit secondaire puisque le fond du générateur de vapeur 90a communique directement par la conduite 6b avec le réservoir 24' qui sert ainsi également de réservoir anticoup de bélier aval. On a fait figurer également la conduite 92 de vidange qui débouche dans le réservoir 24'. Cette conduite, munie de la vanne $V_{11}$, et de très faible diamètre, ne sert que pour vidanger les tuyauteries 8 et 10", car la vidange du générateur de vapeur 90 et du réservoir d'expansion 90f s'effectue par la tuyauterie 6b.

Dans les divers modes de réalisation décrits précédemment, on utilisait des pompes 12' à niveau libre. On peut également utiliser dans la boucle secondaire selon l'invention des pompes à « joint gelé » ou des pompes électromagnétiques.

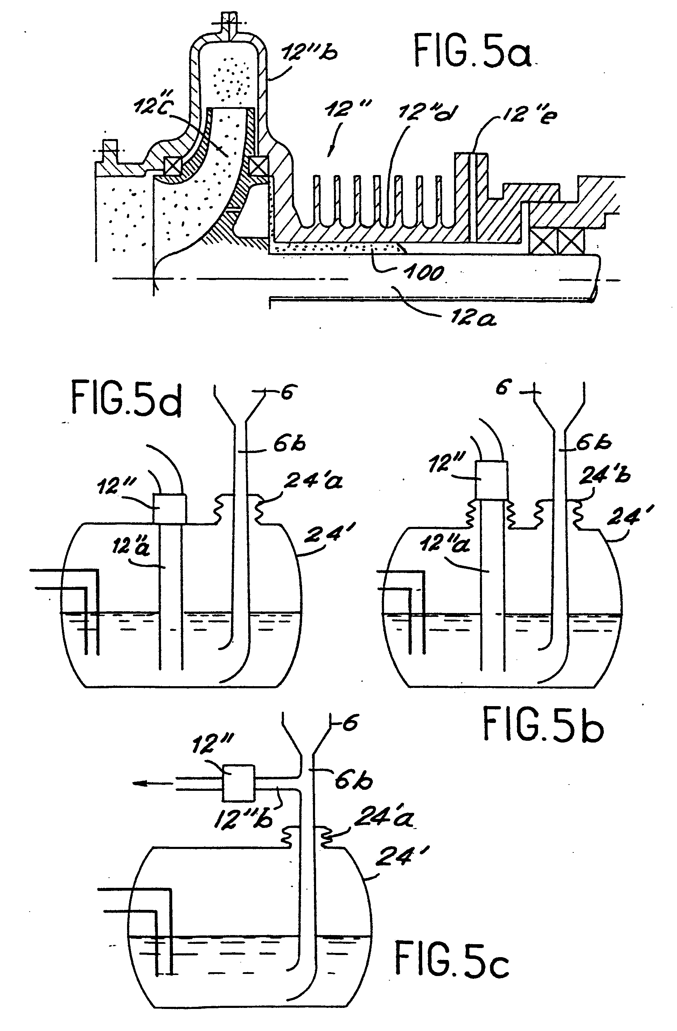

Sur la figure 5a, on a représenté en demi-vue et en coupe axiale une pompe du type A « joint gelé ». On a appelé 12" une telle pompe. Elle comprend le corps de pompe 12"b, une roue 12"c et son arbre d'entraînement 12"a. On trouve également le manchon extérieur 12"d refroidi par des ailettes et une circulation naturelle ou forcée d'air qui crée le « joint gelé » 100 de sodium. Cette pompe comporte également une tubulure 12"e d'admission de gaz inerte pour éviter l'oxydation du « joint gelé » et pour permettre de chasser le « joint gelé » après fusion pour permettre, par exemple, le démontage de la pompe.

La figure 5b donne un exemple de réalisation de la boucle secondaire utilisant des pompes à « joint gelé » 12" (ou éventuellement des pompes électromagnétiques), c'est-à-dire des pompes pour lesquelles il n'est pas nécessaire d'avoir une pression de gaz inerte pour réaliser l'étanchéité.

Sur la figure 5b, la pompe 12" est logée hors du réservoir 24' mais à proximité de celui-ci pour que la pompe occupe une position basse. La conduite d'entrée 12"a plonge dans le sodium et traverse le réservoir par une manchette de dilatation. On peut également implanter directement la pompe sur le réservoir selon la disposition 5d qui permet alors de supprimer la manchette de dilatation 24'a.

Sur la figure 5c, on a représenté le mode de montage préféré de la pompe 12". Cette pompe peut être soit du type mécanique représenté sur la figure 3', soit du type à « joint gelé » représenté sur la figure 5a, soit encore du type électromagnétique qui est bien connu de l'homme de l'art dans la technique des réacteurs nucléaires refroidis par un métal liquide. Selon ce mode de montage, l'entrée 12"b de la pompe 12" est directement reliée à la conduite 6b de sortie du générateur de vapeur 6. Cette conduite est donc située ainsi que la pompe 12" à l'extérieur du réservoir 24'. La sortie 12"c de la pompe est reliée directement par la conduite de refoulement à la conduite 10', c'est-à-dire à l'échangeur intermédiaire ou aux échangeurs intermédiaires 4. Bien entendu, il peut y avoir plusieurs conduites de refoulement. Cependant, l'extrémité inférieure de la conduite 6b plonge dans le réservoir 24" en dessous du niveau minimum de métal liquide.

On comprend que selon ce mode de réalisation préféré, le métal liquide sortant du générateur de vapeur 6 pénètre directement dans la pompe 12" par la conduite 12"b. En d'autres termes, le circuit de métal liquide secondaire ne comprend pas à proprement parler le réservoir 24'. Il n'y a donc pas, en fonctionnement normal, circulation de métal liquide dans le réservoir 24'. Cette disposition est très avantageuse pour la réalisation et le fonctionnement de la boucle secondaire. Cependant, du fait que l'extrémité inférieure de la conduite 6b plonge dans le réservoir 24' et débouche en dessous du niveau minimal de métal liquide, le réservoir 24' peut effectivement jouer son rôle de réservoir « anti-bélier » aval, et de réservoir d'expansion.

Il faut observer que dans le cas du mode de réalisation de la figure 8, on bénéficie du même avantage. Du fait de l'intégration de la pompe à la partie supérieure de l'échangeur, le métal liquide ne circule pas dans le réservoir 24'. Cependant, la conduite 6b établit une communication entre le réservoir 24' et la boucle secondaire.

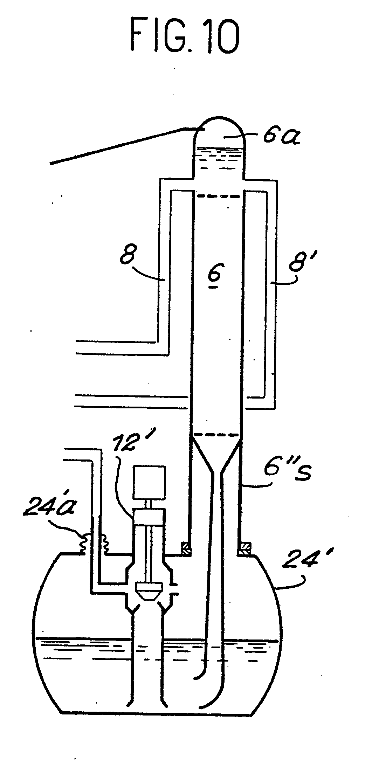

Sur la figure 10, on a représenté une nouvelle variante de réalisation du circuit dans laquelle seul le supportage du générateur de vapeur est modifié. L'enveloppe du générateur se prolonge par une virole de supportage 6's qui est soudée sur la paroi supérieure du réservoir 24'. On fait ainsi l'économie d'une manchette de dilatation 24'a.

Il va de soi que l'on peut, sans sortir de l'invention, combiner les différentes variantes décrites relatives aux différentes parties de la boucle secondaire. En particulier on peut combiner les différents types de générateur de vapeur associés à leur réservoir anti-bélier amont avec les différents types et les différentes implantations de pompe.

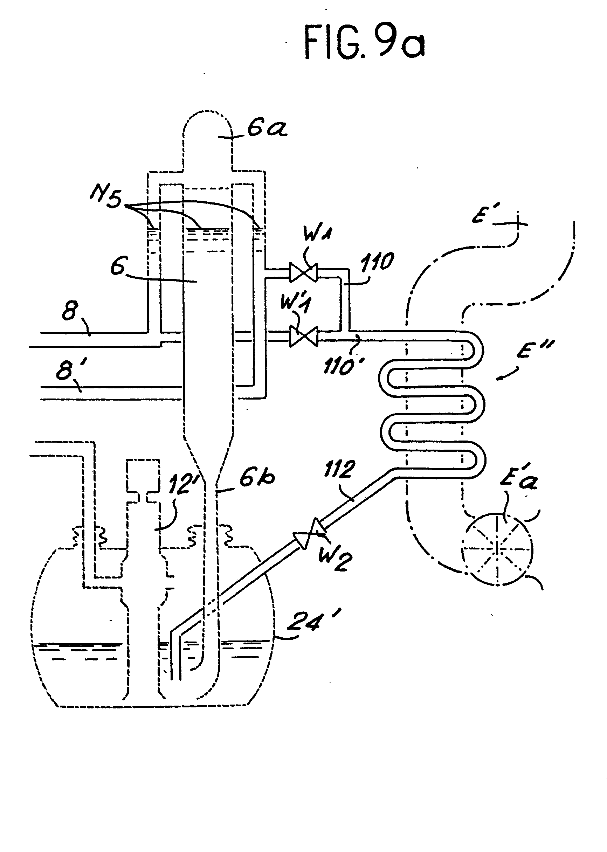

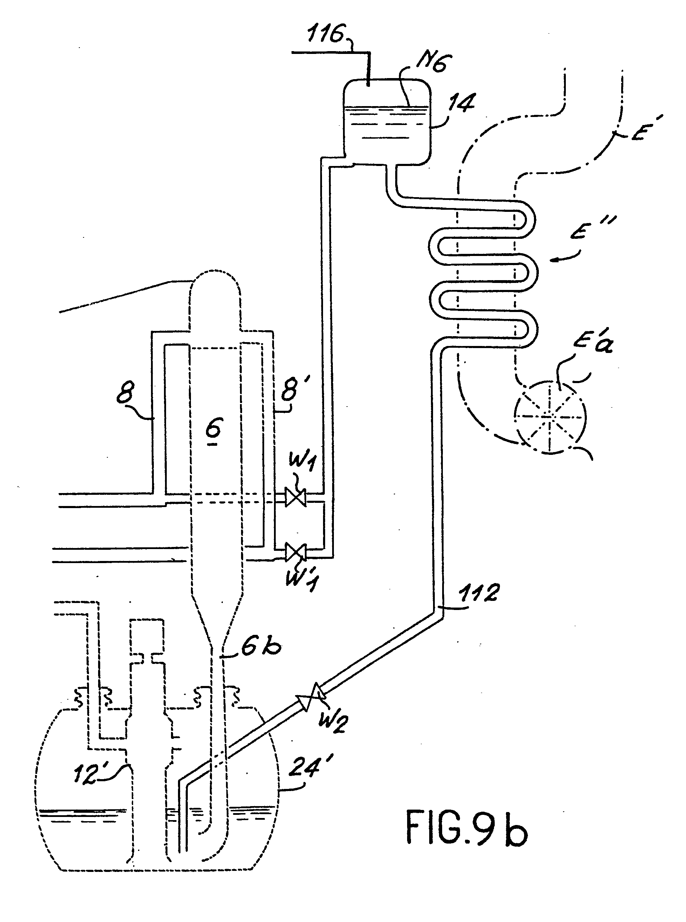

Sur les figures 9a et 9b, on a représenté deux modes de réalisation préférés du circuit de refroidissement de secours. Comme on l'a déjà indiqué, il est en effet souvent utile de prévoir dans la boucle secondaire un tel circuit.

Sur la figure 9a, l'échangeur de secours consiste, à titre d'exemple, dans un serpentin E" qui coopère avec une cheminée à air E' identique à celle de la figure 2. L'enroulement E" est raccordé à son entrée avec les conduites 8 et 8' par l'intermédiaire des canalisations de petit diamètre 110 et 110' munies des vannes de petit diamètre $W_1$, $W'_1$. La sortie du serpentin E" est constituée par la tubulure 112 munie de la vanne de petit diamètre $W_2$. L'extrémité inférieure de la tubulure 112 débouche dans le sodium du réservoir de stockage 24'. Il faut observer que ce sont les piquages des conduites 110 et 110' qui constituent les points hauts du circuit de secours. Par ailleurs, les différents éléments du circuit de secours doivent vérifier les conditions de position suivantes :

— le piquage amont 110, 110' de l'échangeur E" est localisé sur la tuyauterie principale d'entrée 8, 8' du sodium au générateur de vapeur à une altitude inférieure (de quelques mètres par exemple) à celle du débouché de la canalisation principale 8, 8' dans le générateur de vapeur. De la sorte, en abaissant le niveau libre de sodium dans le générateur, on peut dénoyer le débouché de la canalisation principale 8, 8' dans le générateur, sans dénoyer le piquage 110, 110' de l'échangeur E",

— le piquage de restitution 112 de l'échangeur est lui-même reporté à l'aval du générateur en un point dont l'altitude doit être inférieure ou égale à celle du piquage amont. Une disposition particulièrement avantageuse représentée sur la figure 9a est de reporter le débouché de la tuyauterie de restitution 112 dans le réservoir de stockage 24', à l'amont de la tuyauterie d'aspiration de la pompe 12', dans une zone d'écoulement très turbulent. Ainsi, on supprime le mélangeur implanté sur la tuyauterie : il est remplacé par le réservoir de stockage 24' lui-même,

— l'échangeur de secours E" est calé à un niveau quelconque entre les piquages amont et aval ainsi définis. Toutefois, si l'on veut organiser un thermosiphon dans l'échangeur de secours, il faudra placer celui-ci à un niveau suffisant au-dessus des échangeurs intermédiaires 4.

Le fonctionnement de ce système est alors le suivant :

Lorsque le générateur fonctionne, les vannes $W_1$ et $W_2$ sont fermées : le circuit de l'échangeur de secours E" est en argon, donc à l'arrêt, et en préchauffage pour qu'à tout moment on puisse le remplir en sodium sans risquer le bouchage par solidification du sodium en un point quelconque. Cette précaution est également nécessaire au cas où les vannes $W_1$ et $W_2$ viendraient à fuir légèrement : le sodium pénétrant dans le circuit et l'échangeur de secours E" restera à l'état liquide. Lorsque le générateur 6 est à l'arrêt (eau et vapeur remplacées par un gaz neutre comme l'azote par exemple), en ouvrant les vannes $W_1$ et $W_2$, on remplit le circuit correspondant. Il peut être alors utilisé de deux façons :

a) en parallèle sur le générateur 6 : la pompe 12' du circuit assurant un grand débit, une partie de celui-ci traverse le générateur 6 (sans s'y refroidir), l'autre traverse l'échangeur de secours E″ en parallèle et s'y refroidit. Au point de restitution, les deux veines de sodium à températures différentes se mélangent bien car les débits et la turbulence sont élevés en ce point,

b) en thermosiphon : la pompe 12' du circuit est alors à l'arrêt. Afin de forcer tout le débit du thermosiphon à travers l'échangeur de secours on doit, à l'aide de la vanne $V_7$ par exemple (voir fig. 7), admettre de l'argon dans la poche du générateur jusqu'à ce que le niveau libre $N_5$ de la poche dénoie les débouchés des tuyauteries 8 et 8' d'admission du sodium dans le générateur (sans dénoyer, évidemment, le piquage amont du circuit de l'échangeur de secours E″, situé à un niveau inférieur). Alors, plus aucun débit de sodium ne traverse le générateur, la totalité du thermosiphon alimente l'échangeur de secours.

Sur la figure 9b, on a représenté un deuxième mode de réalisation du circuit de secours. La seule différence avec la figure 9a réside dans le fait que l'échangeur de secours E″ constitue alors le point haut du circuit de secours. Il est alors nécessaire d'implanter un évent. Celui-ci peut de préférence être constitué par un petit réservoir d'expansion 114 dont le niveau libre $N_6$ peut être réglé par introduction d'argon par la conduite 116.

Le système représenté sur la figure 9b peut fonctionner selon les deux modes précédemment décrits. Les seules différences concernent le mode opératoire de remplissage et le fonctionnement du circuit d'argon associés.

a) remplissage : après avoir inhibé les régulations de niveau et de pression de la poche d'argon 6a du générateur, on les reporte sur le petit réservoir 114 du circuit de l'échangeur de secours (conduite 116). En ouvrant $W_1$ et $W_2$, qui ne sont pas nécessaires, mais jouent un rôle de sécurité, le remplissage de ce circuit est automatiquement réalisé par contrepression : le niveau $N_6$ du petit réservoir 114 pilote la pression d'argon dans le réservoir de stockage 24' : la pression d'argon du petit réservoir 114 est régulée à 1,1 bar par exemple.

b) fonctionnement lorsque la pompe 12' du circuit principal est en marche : la régulation précédente joue son rôle pour compenser les variations de perte de charge pouvant résulter des variations de débit de la pompe.

Afin d'éviter le dénoyage des débouchés des tuyauteries principales 8 et 8' dans le générateur 6, on peut réguler le niveau de sodium par la vanne $V_7$ de rejet ou d'admission d'argon à la poche 6a du générateur (où la pression est alors libre).

c) fonctionnement en thermosiphon : à partir de la phase finale du remplissage, il faut injecter de l'argon dans la poche 6a du générateur 6 pour abaisser le niveau $N_6$ et dénoyer les débouchés des tuyauteries principales 8 et 8'. On retrouve alors le fonctionnement précédemment décrit.

Comme dans la disposition de la figure 9a, il pourrait être utile de réguler le niveau de la poche 6a d'argon du générateur afin qu'il ne remonte pas intempestivement, ce qui conduirait à by-passer l'échangeur de secours E″. Il faut éviter aussi que ce niveau ne descende intempestivement jusqu'à dénoyer le piquage amont de l'échangeur de secours E″. Pour ce faire, une régulation rudimentaire est suffisante, soit par un capteur de niveau supplémentaire dans la poche du générateur, soit en utilisant une autre valeur de consigne pour la régulation de pression de la poche 6a du générateur, c'est-à-dire une consigne égale à la pression de la poche d'argon du petit réservoir 114 (1,1 bar par exemple) augmentée de la pression équivalente à la hauteur de sodium entre les deux poches 6a et 114.

Le système représenté sur la figure 9b, bien que plus complexe que celui de la figure 9a présente l'avantage de permettre un fonctionnement en thermosiphon, même si le générateur de vapeur est implanté en dessous du niveau des échangeurs intermédiaires 4. Dans ce cas, lorsque l'échangeur de secours E″ est en fonctionnement, la pression statique qui règne dans le réservoir de stockage 24' est plus élevée que lorsque le générateur est seul en marche, puisque l'on doit faire parvenir le sodium à une altitude plus élevée que celle de la tête du générateur 6. L'augmentation correspondante de pression, par exemple de 1 à 2 bars, est parfaitement tolérable, compte tenu des marges que l'on doit conserver lorsque le générateur fonctionne, pour s'accommoder de la réaction sodium-eau. En effet, la surpression de 1 à 2 bars, nécessaire au fonctionnement de l'échangeur de secours E″, est alors prise sur les marges prévues pour la réaction sodium-eau qui, dans ce cas, n'est plus à craindre puisque le générateur de vapeur est sous azote, donc vide de toute eau ou vapeur.

Si l'on n'a pas à envisager pour le circuit de secours un fonctionnement en thermosiphon, le système de la figure 9a est alors plus avantageux bien qu'il introduise nécessairement des vannes $W_1$ et $W_2$ en sodium entre la boucle et le réservoir de stockage. Toutefois, même si ces vannes $W_1$ et $W_2$ fuyaient légèrement, les régulations de niveau et de pression fonctionneraient pour compenser les pertes de sodium.

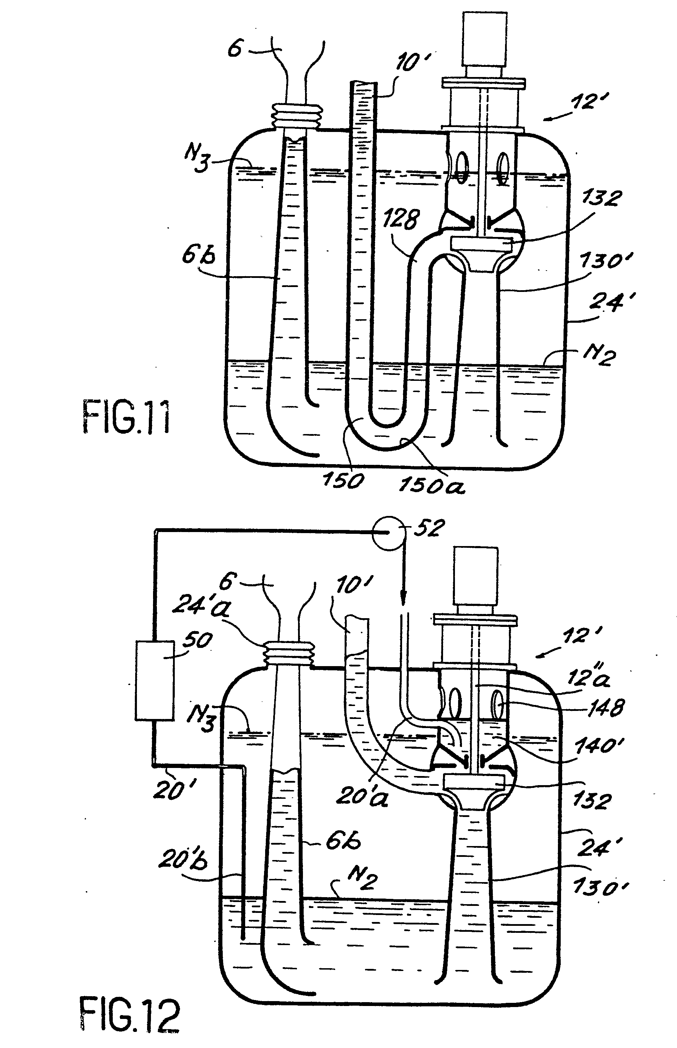

Sur la figure 11, on a représenté un premier mode de réalisation perfectionné de l'invention permettant de s'affranchir de remontée d'argon dans le circuit de sodium de la boucle secondaire et plus précisément dans la conduite de refoulement 10'. Sur cette figure, on a représenté la partie inférieure du générateur de vapeur 6 avec la conduite de sortie 6b qui débouche au fond du réservoir de stockage 24' et de toute manière en dessous du niveau $N_2$ le plus bas du sodium liquide dans ce réservoir.

On a également représenté sur cette figure la pompe 12' avec sa tubulure d'entrée 130' qui plonge dans le réservoir 24' en dessous du niveau minimal $N_2$ de sodium. On a schématisé dans la pompe 12' la roue 132, la buse de sortie de refoulement de sodium 128. Selon ce premier mode de mise en œuvre, on a monté entre la conduite de sortie de pompe 10' et la buse de la pompe 128, une portion de tube coudé 150. Ce tube est disposé de telle manière que son point bas 150a soit situé en dessous du niveau minimal $N_2$ du métal liquide dans le réservoir de stockage 24'.

Comme la tuyauterie de refoulement de la pompe fait un coude vers le fond du réservoir, certes les fuites fonctionnelles $F_1$, $F_2$ ou $F_3$ désamorceront tôt ou tard la pompe, mais le niveau se stabilisera dans la branche descendante de la tuyauterie de refoulement et la boucle restera en sodium, sans que la régulation d'argon ne doive être surdimensionnée. Dans un tel dispositif, le redémarrage de la pompe mécanique ne pourra pas se faire sans précaution puisqu'elle est totalement désamorcée. Une méthode pourra consister à déclencher un début de vidange rapide : elle chassera vers le réservoir de stockage 24' l'argon emprisonné dans la pompe, dans la partie de tuyauterie de refoulement descendante, et dans la tuyauterie d'aspiration de la pompe. On démarrera alors la pompe à faible vitesse pour compléter l'éventage de la boucle (par les events situés en point haut) et les régulations de niveau, de pression étant remises en service, le remplissage complémentaire de la boucle sera assuré automatiquement.

Sur la figure 12, on a représenté un deuxième mode de réalisation perfectionné de l'invention. Dans ce cas, on retrouve les mêmes éléments que sur la figure 10, c'est-à-dire la pompe 12' avec sa tubulure allongée 130' d'entrée qui plonge en dessous du niveau $N_2$, sa roue 132 avec son arbre court 12''a et son réservoir 140' de métal liquide à l'aval du palier hydrostatique. Selon ce mode de réalisation, on raccorde l'extrémité 20'a du circuit 20' annexe et, par exemple, utilisé par ailleurs pour la purification, à la pompe et plus précisément au réservoir 140' ménagé dans la virole de supportage du corps de pompe. Le circuit annexe 20' complet comprend bien sûr une autre extrémité de prélèvement 20'b dans le réservoir de stockage 24', cette extrémité débouchant en dessous du niveau bas $N_2$. Ce circuit comporte outre un dispositif éventuel de purification 50, une pompe 52 de préférence du type électromagnétique qui fonctionne en permanence. Il y a donc en permanence prélèvement de sodium liquide dans la partie basse du réservoir de stockage 24' et réinjection de sodium liquide dans la partie haute de la pompe 12'. Le retour de sodium s'effectue donc dans le corps de pompe, au-dessus du niveau supérieur du palier hydrostatique et plus généralement au-dessus du niveau de toute fuite $F_1$, $F_2$, $F_3$ faisant communiquer la partie haute pression de la pompe et l'atmosphère d'argon du réservoir de stockage.

En fonctionnement normal de la pompe 12', les fuites fonctionnelles et le débit de sodium fourni par le circuit annexe 20' (qui comporte elle-même comme on l'a indiqué une petite pompe 52 spéciale généralement de type électromagnétique, assurant le débit requis par la purification s'il s'agit de ce circuit), s'ajoutent. Le corps de pompe supérieur est rempli de sodium jusqu'au niveau des fenêtres de trop-plein 148 prévues dans la virole support de pompe 120.

A l'arrêt de la pompe, une partie du sodium fourni par la purification sera aspirée à travers les sections de passage des fuites fonctionnelles. L'excédent se déversera comme à l'accoutumée par le trop-plein, à condition évidemment que le débit de la purification soit supérieur à celui aspiré par les fuites fonctionnelles. Une telle condition est facile à respecter si l'on tient compte de valeurs couramment adoptées pour le débit de purification par exemple quelques dizaines de litres par seconde. En effet, le débit aspiré à travers les jeux fonctionnels correspond en gros au débit qu'engendre l'action de la gravité à travers une section de passage égale à celle de toutes les fuites fonctionnelles sous une charge hydraulique de quelques mètres (différence d'altitude entre les fuites fonctionnelles et la surface libre du réservoir de stockage). Un tel débit reste modéré, par exemple quelques litres à quelques dizaines de litres par seconde. Par l'artifice décrit, on a réalisé un tampon de sodium au-dessus des fuites fonctionnelles. Tant que ce tampon est présent, les fuites aspirent du sodium et on évite ainsi toute entrée de bulles d'argon dans la pompe et, de là, dans le circuit. On évite donc le désamorçage de la pompe et la vidange progressive du circuit. Ces incidents deviennent tout à fait exceptionnels puisqu'ils supposent que l'on a simultanément l'arrêt intempestif de la pompe principale 12' et de la pompe de purification 52. Si cette éventualité se produit néanmoins, on n'a pas nécessairement désamorçage et vidange de la boucle. En effet, si lors de l'arrêt de la pompe principale 12', la pompe de purification 52 est arrêtée ou s'arrête pour une durée limitée, on aura une amorce de vidange de la boucle. Celle-ci sera lente et pourra même être encore davantage ralentie par l'intervention de la régulation du niveau de sodium de la poche d'argon 6a du générateur de vapeur 6, selon le processus décrit précédemment, même si le circuit d'argon, non surdimensionné, ne suffit pas à assurer le débit requis pour compenser exactement le débit d'argon qui fuit à travers la pompe. Dans la mesure où ce fonctionnement est très exceptionnel, l'infraction à la règle de l'art dont il a été parlé est tolérable. Mais pour que ce fonctionnement soit possible et que l'on puisse retrouver les conditions habituelles lorsque la pompe de purification est remise en marche, il faut que le circuit secondaire et la pompe principale 12' soient conçus en conséquence : il faut que les bulles d'argon qui pénètrent dans la pompe puissent constamment s'échapper par gravité vers le haut. Il suffit pour cela de donner aux structures internes à la pompe et aux tuyauteries de refoulement 10' une pente suffisante convenablement orientée. En effet, s'il n'en est pas ainsi, et notamment si le circuit est conçu selon le principe de la première variante décrite plus haut (figure 11), après désamorçage de la pompe, la charge d'aspiration des fuites fonctionnelles est supprimée : si la pompe 52 de purification débite à nouveau, et reconstitue ainsi le tampon de sodium au-dessus des orifices de fuites fonctionnelles, la charge de ce tampon sera insuffisante pour éliminer la poche d'argon emprisonnée dans la pompe et au-dessous d'elle. Pour redémarrer la pompe, il faudra procéder comme pour le premier mode de réalisation (figure 11). Que l'on utilise le premier perfectionnement, ou le second, ou une combinaison des deux (avec l'inconvénient qui vient d'être signalé dans ce dernier cas) l'opération de remplissage de la boucle initialement vide à partir du réservoir de stockage initialement plein peut s'effectuer aisément selon un processus identique. En effet, comme on l'a vu, lorsque le réservoir est plein la pompe est totalement noyée, elle est donc amorcée, y compris dans le cas du premier perfectionnement, puisqu'alors le point haut que constitue la pompe se purge vers l'atmosphère d'argon du stockage de l'argon qu'il pourrait contenir, à travers les fuites fonctionnelles. Dans le cas du deuxième perfectionnement, cette purge est permanente puisque l'on a prévu des pentes pour les organes internes à la pompe, et pour les tuyauteries de refoulement r elles permettent aux bulles d'argon de remonter par gravité vers le point haut de la boucle (la poche d'argon 6a du générateur de vapeur 6).

Dans ces conditions, on peut démarrer la pompe en toute sécurité. On ajustera sa vitesse de rotation à débit pratiquement nul de telle sorte qu'elle fournisse une hauteur de refoulement légèrement supérieure à la dénivellation entre le niveau des fuites fonctionnelles et celui qu'atteindra la surface libre du sodium du réservoir lorsque la boucle sera remplie. On procède alors selon la méthode décrite dans le titre principal à la pressurisation progressive du réservoir de stockage pour faire monter, par contre-pression le sodium dans la boucle. Au cours de cette opération, la pompe est maintenue en rotation et fournit donc une légère surpression à l'amont (c'est-à-dire du côté intérieur à la pompe) des fuites fonctionnelles. Ces fuites éjectent donc vers l'atmosphère d'argon du stockage, un certain débit de sodium, comme cela a lieu lors du fonctionnement normal de l'installation : il n'y a pas d'entrée d'argon dans la pompe.

Bien entendu, ces deux premiers modes de protection du circuit secondaire vis-à-vis de l'introduction de gaz inerte peuvent être combinés.

On peut noter que ce processus de démarrage peut ne pas être employé avec le deuxième mode de mise en œuvre du perfectionnement utilisé seul ou en combinaison avec le premier. Il faut alors que la pompe de purification soit préalablement mise en route : le tampon de sodium au-dessus des fuites fonctionnelles reste constamment alimenté tout au cours du remplissage, et il est partiellement aspiré à travers les fuites fonctionnelles, évitant là aussi toute entrée d'argon.

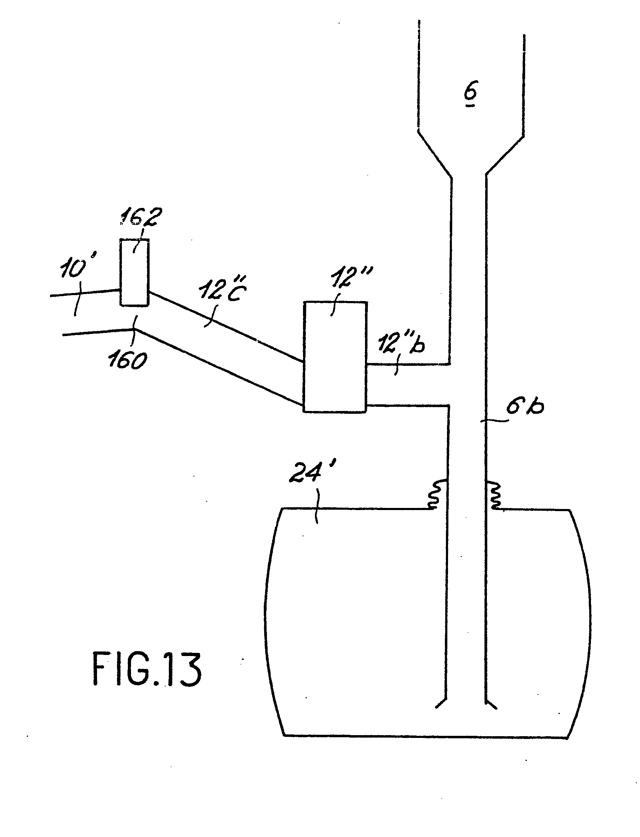

Sur la figure 13, on a représenté un troisième mode de réalisation du dispositif de protection vis-à-vis d'une remontée de bulles de gaz dans le circuit secondaire de sodium en cas d'arrêt de la pompe 12′. Ce dispositif est appliqué au cas de la fig. 5c.

La conduite de refoulement 12″c de la pompe 12″ présente un point haut 160. La conduite 12″c entre la sortie de la pompe et le point haut 160 présente une pente suffisante et une orientation convenable pour permettre l'échappement des bulles de gaz et leur remontée par gravité jusqu'au point haut 160. Un évent 162 permet l'évacuation de ce gaz. Pour maintenir cependant la pression voulue dans le réservoir 24′, on réinjecte dans le réservoir 24′ une quantité équivalente de gaz par exemple comme cela est indiqué sur la figure 7.

Bien entendu, ce dispositif peut être utilisé également lorsque la pompe 12″ plonge dans le réservoir, la conduite de refoulement 12″c traversant alors la paroi supérieure du réservoir 24′. De même, ce dispositif de protection peut se combiner à ceux qui ont été décrits précédemment.

En conclusion, les perfectionnements proposés visent à favoriser encore davantage les possibilités de réduire le coût d'un circuit secondaire de refroidissement, d'améliorer sa fiabilité, sa sûreté et sa facilité d'exploitation, en évitant qu'en cas d'arrêt intempestif de la pompe principale supposée munie d'un arbre aussi court que possible, celle-ci ne se désamorce et que la boucle ne soit progressivement vidangée. Pour atteindre ce but, les perfectionnements consistent soit en un tracé particulier de la tuyauterie de refoulement de la pompe, soit en une implantation judicieuse de la tuyauterie de rejet du sodium provenant de la purification et aspiré par une pompe (électromagnétique par exemple) indépendante de la pompe principale. Il faut ajouter que dans ces trois modes de mise en œuvre, on s'efforce de réduire autant que faire se peut, les débits de fuite fonctionnelle de métal liquide dans la pompe.

L'avantage essentiel du circuit d'évacuation de la puissance résiduelle ou circuit de secours selon les perfectionnements proposés est en définitive le suivant : par rapport aux dispositifs habituels, ils permettent la suppression des vannes de grand diamètre sur les tuyauteries principales, et les mélangeurs rendus nécessaires dans le système habituel par le confluent, dans la tuyauterie principale, de deux veines de sodium à température différente.

Il découle de la description précédente que la boucle secondaire, objet de l'invention, présente plusieurs caractéristiques avantageuses susceptibles, pour certaines, d'apporter une solution définitive à quelques-unes des caractéristiques désavantageuses des boucles secondaires habituelles. Dans d'autres cas, la boucle selon l'invention, améliore sensiblement la situation. Les différents avantages offerts par la boucle secondaire selon l'invention sont, en résumé, les suivants :

— elle permet, en toute sécurité, de placer une pompe à surface libre du type actuel en point bas, donc dans de bonnes conditions de coefficient NPSH, ce qui autorise une vitesse de rotation plus élevée, une roue de plus petit diamètre, un mode d'entraînement moins lourd, donc un ensemble moto-pompe moins coûteux,

— elle permet de réduire le nombre des réservoirs fonctionnels de la boucle : si le générateur de vapeur est muni d'une poche d'argon, il y a un seul réservoir servant de stockage, d'expansion, de réservoir anti-bélier, et de récupérateur de sodium pollué,

— elle permet de placer les éléments lourds du circuit en point bas (réservoir de stockage ci-dessus et pompe), ce qui favorise leur supportage, notamment pour résister à des sollicitations séismiques,

— elle favorise la réduction des longueurs de tuyauteries de grand diamètre (tuyauteries principales),

— elle permet de simplifier certains auxiliaires et même de supprimer certains d'entre eux : vannes et tuyauteries de vidange, circuits d'équilibrage de niveaux, de trop-plein, etc. Elle facilite d'ailleurs les opérations de remplissage et vidange,

— elle permet de diminuer considérablement le rôle ou de supprimer les membranes de rupture en sodium, coûteuses, et sources de servitudes d'exploitation (entretien périodique) et d'incidents pouvant avoir des répercussions importantes pour la sûreté (fuites et feux du sodium, perte des circuits normaux d'évacuation de la puissance),

— elle permet de s'accommoder plus facilement d'une réaction sodium-eau,

— pour toutes ces raisons, elle permet de concevoir un système plus compact, mais haut, donc finalement moins encombrant et moins coûteux à installer,

— pour les raisons précédentes, elle conduit à une boucle contenant moins de sodium, ce qui a un effet favorable sur la taille du réservoir de stockage et plus généralement sur l'importance des dispositifs de préchauffage, sur celui du calorifuge, sur celui des supportages, sur celui des passerelles d'accès, etc.,

— enfin, pour toutes ces raisons réunies, elle réduit l'importance du contrôle-commande à associer à ces systèmes.

**Revendications**

1. Circuit caloporteur secondaire pour un réacteur nucléaire du type refroidi par un métal liquide, ledit circuit comprenant au moins un échangeur intermédiaire (4) logé dans la cuve (2) dudit réacteur, un générateur de vapeur (6) extérieur à ladite cuve pour l'échange de calories entre le métal liquide secondaire circulant dans ledit circuit secondaire et de l'eau-vapeur, au moins une pompe de circulation (12') dudit métal liquide secondaire et un réservoir de stockage (24') dudit métal liquide secondaire et de récupération des produits créés par une éventuelle réaction métal liquide-eau dans ledit générateur de vapeur, ledit métal liquide étant susceptible d'occuper un niveau minimal $(N_2)$ dans ledit réservoir, ledit réservoir étant placé au niveau le plus bas de l'installation nucléaire, caractérisé en ce que l'extrémité inférieure de la conduite de sortie (6b) de métal liquide dudit générateur de vapeur (6) plonge directement dans ledit réservoir (24') en ce qu'est maintenue dans ledit réservoir au-dessus du métal liquide une couverture de gaz inerte à une pression telle qu'elle équilibre la pression de métal liquide dans la totalité de ladite boucle secondaire, ledit réservoir (24') jouant ainsi en plus le rôle de réservoir anti-bélier aval pour ledit générateur de vapeur et de réservoir d'expansion lors des variations de température dudit métal liquide et en ce que, ladite pompe (12') comportant un rotor, ce rotor est situé au-dessus dudit niveau minimal $(N_2)$.

2. Circuit selon la revendication 1, caractérisé en ce que ladite pompe de circulation (12') est du type à niveau libre, et en ce que ladite pompe est logée dans ledit réservoir (24'), l'entrée de la pompe plongeant directement dans le métal liquide contenu dans ledit réservoir, la sortie de ladite pompe étant directement reliée au ou à chacun desdits échangeurs intermédiaires (4).

3. Circuit selon la revendication 1, caractérisé en ce que ladite pompe (12'') est du type électromagnétique ou à « joint gelé » et en ce que ladite pompe est logée immédiatement au-dessus dudit réservoir (24'), la conduite d'entrée (12''a) de la pompe plongeant dans le métal liquide dudit réservoir, la conduite de sortie (12''c) étant directement reliée à l'échangeur intermédiaire ou auxdits échangeurs intermédiaires (4).

4. Circuit selon la revendication 1, caractérisé en ce que l'entrée (12''b) de ladite pompe (12'') est branchée sur la conduite de sortie (6b) dudit générateur de vapeur (6) en amont dudit réservoir (24') et en ce que la sortie (12''c) de ladite pompe est directement raccordée à l'échangeur intermédiaire ou auxdits échangeurs intermédiaires (4), ladite pompe étant extérieure audit réservoir.

5. Circuit selon la revendication 1, caractérisé en ce que ladite pompe (90e) est intégrée audit générateur de vapeur (90e) et disposée à la partie supérieure de son enveloppe, ledit générateur de vapeur comportant une cheminée centrale (90b) dans laquelle circule le métal secondaire après avoir traversé le faisceau d'échange, ladite cheminée centrale constituant la conduite d'entrée de ladite pompe, la sortie (10'') de ladite pompe étant directement raccordée audit échangeur intermédiaire ou auxdits échangeurs intermédiaires (4).

6. Circuit selon l'une quelconque des revendications 1 à 4, caractérisé en ce que le générateur de vapeur (6) comporte à la partie supérieure de son enveloppe, au-dessus du faisceau de tubes d'échange (54) des moyens (76,V7) pour injecter un gaz inerte et pour en régler la pression afin de définir un niveau libre de métal liquide secondaire, la partie supérieure (6a) de ladite enveloppe constituant ainsi un réservoir anti-bélier amont pour ledit générateur de vapeur.

7. Circuit selon l'une quelconque des revendications 1 à 4, caractérisé en ce que ledit générateur de vapeur (6', 6'') comporte une enceinte (6'a, 6''a) disposée au-dessus de son enveloppe et communiquant avec lui par une conduite (6'b), ladite enceinte comportant des moyens pour y injecter un gaz inerte sous pression pour régler le niveau libre de métal liquide dans cette enceinte, ladite enceinte constituant un réservoir anti-bélier amont pour ledit générateur de vapeur.

8. Circuit selon l'une quelconque des revendications 1 à 7, caractérisé en ce que ledit générateur de vapeur (6) est supporté par une virole (6''s) qui repose directement sur la paroi supérieure du réservoir de stockage (24'), la conduite de sortie du générateur de vapeur étant interne à ladite virole.

9. Circuit caloporteur secondaire selon la revendication 2 dans lequel le métal liquide occupe dans ledit réservoir (24') un niveau inférieur ($N_2$) lorsque ledit circuit secondaire est rempli dudit métal liquide et un niveau supérieur ($N_3$) lorsque ledit circuit secondaire est vide, caractérisé en ce que la roue (132) de ladite pompe (12') est montée au bout de son arbre à un niveau intermédiaire entre ledit niveau inférieur et ledit niveau supérieur, en ce que ladite conduite d'aspiration (130') de la pompe débouche en dessous dudit niveau inférieur ($N_2$) et en ce que ladite pompe est munie de moyens de protection (150, 20') lorsque le métal liquide occupe ledit niveau inférieur pour empêcher le passage du gaz surmontant ledit métal liquide dans la conduite de refoulement de ladite pompe au risque de désamorçage de celle-ci, lorsqu'elle est mise volontairement ou intempestivement à l'arrêt.

10. Circuit selon la revendication 9, caractérisé en ce que lesdits moyens de protection consistent dans le fait que ladite conduite de refoulement (10') est coudée (150) et présente un point bas (150a) dans ledit réservoir de stockage (24') qui est situé en dessous du niveau inférieur ($N_2$).

11. Circuit selon la revendication 9, caractérisé en ce qu'il comprend un circuit annexe (20') muni d'une pompe propre (52), dans lequel circule le métal liquide, l'entrée (20'b) dudit circuit annexe débouchant dans le réservoir de stockage (24') en dessous du niveau inférieur ($N_2$), et en ce que les moyens de protection consistent en ce que la sortie (20'a) dudit circuit annexe débouche dans le corps de pompe (12') au-dessus de ladite roue (132), le débit dudit circuit annexe étant supérieur ou égal au débit aspiré par les fuites fonctionnelles de ladite pompe, lorsqu'elle est à l'arrêt.

12. Circuit selon la revendication 11, caractérisé en ce que ledit circuit annexe (20') est le circuit de purification.

13. Circuit selon la revendication 10 et selon l'une quelconque des revendications 11 et 12.

14. Circuit selon l'une quelconque des revendications 2 à 4, caractérisé en ce que la ou lesdites conduites de refoulement (12''c) reliant la sortie de ladite pompe (12'') audit échangeur intermédiaire (4) comporte un point haut (160), la portion de ladite conduite entre la sortie de la pompe et ledit point haut présente une pente suffisante et convenablement orientée pour que les bulles de gaz susceptibles de pénétrer dans ladite pompe puissent s'échapper et remonter par gravité jusqu'audit point haut, en ce que ledit point haut est muni d'un évent (162) permettant l'évacuation desdites bulles et en ce qu'il comprend des moyens pour introduire une quantité équivalente de gaz dans ledit réservoir (24') pour maintenir ladite pression.

15. Circuit selon la revendication 14 et selon l'une quelconque des revendications 10 à 12.

## Claims

1. Secondary coolant circuit for a liquid metal-cooled nuclear reactor, said circuit comprising at least one intermediate exchanger (4) located within the tank (2) of the said reactor, a steam-generator (6) outside the said tank for heat exchange between water vapour and said secondary liquid metal circulating in said secondary circuit, at least one pump (12') for circulating said secondary liquid metal and a reservoir (24') for storing said secondary liquid metal and recovering products of any reaction between liquid metal and water in said steam generator, said liquid metal being capable of occupying a minimum level ($N_2$) in the said reservoir, and the said reservoir being located on a lower level than the nuclear installation, characterized in that the lower end of the liquid metal-outlet conduit (6b) dips directly into the said reservoir (24'), and in that an inert gas blanket is maintained in the said reservoir at a pressure in equilibrium with the pressure of liquid metal in the entire secondary circuit, said reservoir (24') thus acting as an anti-surge reservoir downstream of the said steam generator and as an expansion reservoir against temperature variations of the said liquid metal, and in that said pump (12') has a rotor located above said minimal level ($N_2$).

2. Circuit according to Claim 1 characterized in that the said circulation pump (12') is of the « free surface » type, and in that the said pump is located in the said reservoir (24'), the intake of the pump dipping directly into the liquid metal contained in the said reservoir, the outlet of the pump being directly connected to the said intermediate exchanger or exchangers.

3. Circuit according to Claim 1 characterized in that the said pump (12'') is of the electromagnetic or « frozen joint » type, and in that the said pump is located immediately above the said reservoir (24'), the intake conduit (12''a) of the pump dipping into liquid metal in the reservoir, the outlet conduit (12''c) being directly connected to the said intermediate exchanger or exchangers (4).

4. Circuit according to Claim 1 characterized in that the intake (12″b) of the said pump (12″) is branched from the outlet conduit (6b) of the said steam generator (6) upstream of said reservoir (24′), and in that the outlet (12″c) of said pump is directly connected to said intermediate exchanger or exchangers (4), said pump being external of said reservoir.

5. Circuit according to Claim 1 characterized in that said pump (90e) is integral with said steam generator (90) and located in the upper part of its envelope, said generator having a central chimney (90b) through which the secondary metal circulates after traversing the heat exchange section, said central chimney constituting the intake conduit of said pump, the outlet (10″) of said pump being directly connected to the said intermediate exchanger or exchangers (4).

6. Circuit according to any one of Claims 1 to 4 characterized in that the steam generator (6) has at the upper part of its envelope, above the bundle of heat exchange tubes (54), means (76, $V_7$) to inject inert gas and to regulate pressure whereby to define a free surface of secondary liquid metal, the upper part (6a) of the said envelope thereby constituting an upper anti-surge reservoir for said steam generator.

7. Circuit according to any one of Claims 1 to 4 characterized in that the steam generator (6′, 6″) comprises an enclosure (6′a, 6″a) disposed above its envelope and communicating with it by a conduit (6′b), said enclosure having means for injecting a pressurised inert gas to control the free surface of liquid in said enclosure, said enclosure constituting an upper anti-surge reservoir for said steam generator.

8. Circuit according to any one of Claims 1 to 7 characterized in that the said steam generator (6) is supported by a collar (6″s) which rests directly on the upper surface of the reservoir (24′), the outlet conduit of the steam generator being internal of said collar.

9. Secondary coolant circuit according to Claim 2 in which the metal in the reservoir (24′) is at a lower level ($N_2$) when said circuit is filled with said liquid metal and an upper level ($N_3$) when said secondary circuit is empty, characterized in that the rotor (132) of the said pump (12′) is mounted at the end of its train at a level intermediate between the said lower and upper levels, and in that the intake conduit (130′) of the pump opens below said lower level ($N_2$), and in that the said pump has protection means (150, 20′) to prevent passage of gas surmounting the said liquid metal in the outlet conduit of the pump when the metal is at the said lower level, to avoid the risk of the pump running dry when it is voluntarily or accidentally stopped.

10. Circuit according to Claim 9 characterized in that the said protection means consist in the fact that the said outlet conduit (10′) has a bend (150) with a lower point (150a) in said reservoir (24′) situated below said lower level ($N_2$).

11. Circuit according to Claim 9 characterized in that it has an additional circuit (20′) having its own pump (52), in which the liquid metal circulates, the intake (20′b) of said additional circuit opening into the reservoir (24′) below the lower level ($N_2$), and in that the protection means are provided by the outlet (20′a) of said additional circuit opening into the body of the pump (12′) above the said rotor (132), the capacity of the additional circuit being equal to or greater than the capacity of the fluids in the pump when it is stopped.

12. Circuit according to Claim 11 characterized in that the said additional circuit (20′) is the purification circuit.

13. Circuit according to Claim 10 and according to any one of Claims 11 and 12.

14. Circuit according to any one of Claims 2 to 4 characterized in that the said outlet conduit or conduits (12″c) connected the outlet of said pump (12″) to said intermediate exchanger has a high point (160), the portions of the said conduit between the pump outlet and the said high point having a slope such that bubbles of gas able to pass through said pump may escape and pass to said high point, and in that said high point has a vent (162) permitting evacuation of the said bubbles, and in that it has means for introducing an equivalent quantity of gas into the reservoir (24′) to maintain the said pressure.

15. Circuit according to Claim 14 and according to any one of Claims 10 to 12.

## Ansprüche

1. Sekundär-Wärmeträgerkreis für einen mit flüssigem Metall gekühlten Kernreaktor, mit wenigstens einem im Trog (2) des Reaktors angeordneten Zwischenwärmetauscher (4), einem außerhalb des Trogs angeordneten Dampferzeuger (6) für den Wärmetausch zwischen dem als sekundärer Wärmeträger im Sekundärkreis umlaufenden flüssigen Metall und Wasser/Dampf, wenigstens einer Umwälzpumpe (12′) für das als sekundärer Wärmeträger verwendete flüssige Metall und einem Behälter für die Speicherung des als sekundärer Wärmeträger verwendeten flüssigen Metalls sowie zum Auffangen von durch eine gegebenenfalls eintretende Reaktion zwischen flüssigem Metal und Wasser im Dampferzeuger entstehenden Produkten, wobei das flüssige Metall den Behälter (24′) bis zu einer Mindesthöhe ($N_2$) füllen kann und der Behälter auf dem niedrigsten Niveau der Reaktoranlage angeordnet ist, dadurch gekennzeichnet daß das untere Ende der Flüssigmetall-Abflußleitung (6b) des Dampferzeugers (6) direkt in den Behälter (24′) eintaucht, daß innerhalb des Behälters über dem flüssigen Metall ein Kissen aus inertem Gas unter einem solchen Druck aufrechterhalten wird, daß es den Druck des flüssigen Metalls im gesamten Sekundärkreis ausgleicht, so daß der Behälter (24′) zusätzlich die Aufgabe einer abströmseitigen Wasserschlagsicherung für den Dampferzeuger sowie eines Ausdehnungsbehälters für das flüssige Metall bei Temperaturänderungen desselben erfüllt, und daß die Pumpe (12') einen Läufer enthält, welcher oberhalb der genannten Mindesthöhe (N₂) angeordnet ist.

2. Wärmeträgerkreis nach Anspruch 1, dadurch gekennzeichnet, daß die Umwälzpumpe (12') eine selbstansaugende Pumpe ist, daß die Pumpe in dem Behälter (24') angeordnet ist, daß der Einlaß der Pumpe direkt in das in dem Behälter enthaltene flüssige Metall eintaucht und daß der Ausgang der Pumpe direkt mit dem oder jedem Sekundär-Wärmetauscher (4) verbunden ist.

3. Wärmeträgerkreis nach Anspruch 1, dadurch gekennzeichnet, daß die Pumpe (12'') · eine elektromagnetische Pumpe oder eine Pumpe mit erstarrter Flüssigdichtung (joint gelé) und unmittelbar oberhalb des Behälters (24') angeordnet ist, so daß die Ansaugleitung (12''a) der Pumpe in das im Behälter enthaltene flüssige Metall eintaucht, während die Ausgangsleitung (12''c) direkt mit dem oder jedem Sekundärwärmetauscher (4) verbunden ist.

4. Wärmeträgerkreis nach Anspruch 1, dadurch gekennzeichnet, daß der Einlaß (12''b) der Pumpe (12'') an der Zulaufseite des Behälters (24') als Abzweigung an der Abflußleitung (6b) des Dampferzeugers (6) angeschlossen ist und daß der Ausgang (12''c) der Pumpe direkt mit dem oder den Sekundär-Wärmetauschern (4) verbunden ist, wobei die Pumpe außerhalb des Behälters angeordnet ist.

5. Wärmeträgerkreis nach Anspruch 1, dadurch gekennzeichnet, daß die Pumpe (90e) in den Dampferzeiger (90e) integriert und am oberen Teil von dessen Gehäuse angeordnet ist, daß der Dampferzeuger einen nach der Durchströmung des Wärmetauscher-Rohrbündels von dem als sekundärer Wärmeträger verwendeten flüssigen Metall durchströmten Mittelschacht (90b) aufweist, welcher die Ansaugleitung der Pumpe darstellt, und daß der Ausgang (10'') der Pumpe direkt mit dem oder den Sekundär-Wärmetauscher(n) (4) verbunden ist.

6. Wärmeträgerkreis nach einem der Ansprüche 1 bis 4, dadurch gekennzeichnet, daß der Dampferzeuger (6) am oberen Teil seines Gehäuses oberhalb des Wärmetauscher-Rohrbündels (54) Einrichtungen (76, V₇) zum Einblasen eines inerten Gases und zum Regeln des Drucks desselben für die Einstellung eines freien Niveaus des als sekundärer Wärmeträger verwendeten flüssigen Metalls enthält, so daß der obere Teil (6a) des Gehäuses eine zuströmseitige Wasserschlagsicherung für den Dampferzeuger darstellt.

7. Wärmeträgerkreis nach einem der Ansprüche 1 bis 4, dadurch gekennzeichnet, daß der Dampferzeuger (6', 6'') eine oberhalb seines Gehäuses angeordnete und kit ihm über eine Leitung (6'b) strömungsverbundene Kammer (6'a, 6''a) aufweist, welche mit Einrichtungen zum Einblasen eines inerten Gases für die Einstellung des freien Niveaus des flüssigen Metalls in der Kammer versehen ist und eine Wasserschlagsicherung an der Zuströmseite des Dampferzeugers darstellt.

8. Wärmeträgerkreis nach einem der Ansprüche 1 bis 7, dadurch gekennzeichnet, daß der Dampferzeuger (6) von einem direkt auf der oberen Wand des Speicherbehälters (24') ruhenden Tragring (6'') getragen wird und daß die Ausgangsleitung des Dampferzeugers innerhalb des Tragrings angeordnet ist.

9. Sekundär-Wärmeträgerkreis nach Anspruch 2, in welchem das flüssige Metall den Speicherbehälter (24') bis zu einem unteren Niveau (N₂) bzw. bis zu einem oberen Niveau (N₃) füllt, wenn der Sekundärkreis mit dem flüssigen Metall gefüllt bzw. leer ist, dadurch gekennzeichnet, daß der Läufer (132) der Pumpe (12') am Ende seiner Welle in einer zwischen dem unteren und dem oberen Niveau liegenden Höhe angebracht ist, daß die Saugleitung (130') der Pumpe unterhalb des unteren Niveaus ausmündet und daß die Pumpe mit Schutzeinrichtungen (150, 20') versehen ist, welche bei einer Standhöhe des flüssigen Metalls auf dem unteren Niveau das Aufsteigen von Gas in dem flüssigen Metall in der Druckleitung der Pumpe oder das Auslaufen der Pumpe bei absichtlicher oder unbeabsichtigter Stillsetzung derselben verhindern.

10. Wärmeträgerkreis nach Anspruch 9, dadurch gekennzeichnet, daß die Schutzeinrichtungen darin bestehen, daß die Druckleitung (10') gekröpft (150) ist und innerhalb des Speicherbehälters (24') eine tiefste Stelle (150') aufweist, welche unterhalb des unteren Niveaus (N₂) liegt.

11. Wärmeträgerkreis nach Anspruch 9, dadurch gekennzeichnet, daß er einen mit einer eigenen Pumpe (52) versehenen Nebenkreis (20') aufweist, in welchen das flüssige Metall umläuft und dessen Einlaß (20'b) unterhalb des unteren Niveaus (N₂) im Speicherbehälter (24') mündet, und daß die Schutzeinrichtungen darin bestehen, daß der Ausgangs (20'a) des Nebenkreises oberhalb des Läufers (132) im Körper der Pumpe (12') ausmündet, wobei die Förderleistung des Nebenkreises größer als oder gleich das bzw. dem im Stillstand der Pumpe aus dieser entweichenden Volumen ist.

12. Wärmeträgerkreis nach Anspruch 11, dadurch gekennzeichnet, daß der Nebenkreis (20') der Reinigungskreis ist.

13. Wärmeträgerkreis nach Anspruch 10 und nach einem der Ansprüche 11 und 12.

14. Wärmeträgerkreis nach einem der Ansprüche 2 bis 4, dadurch gekennzeichnet, daß die den Ausgang der Pumpe (12'') mit dem Sekundärwärmetauscher verbindende(n) Druckleitung(en) (12''c) einen höchsten Punkt (160) aufweist bzw. aufweisen, daß der zwischen dem Ausgang der Pumpe und dem höchsten Punkt verlaufende Abschnitt eine ausreichende Steigung aufweist und derart ausgerichtet ist, daß gegebenenfalls in die Pumpe eindringende Gasblasen durch ihren Auftrieb zum höchsten Punkt steigen können, und daß der höchste Punkt mit einer Einrichtung (162) für das Entweichen solcher Gasblasen versehen ist, und daß Einrichtungen für die Zufuhr einer äquivalenten Gasmenge in den Speicherbehälter (24') für die Aufrechterhaltung des Drucks vorhanden sind.

15. Wärmeträgerkreis nach Anspruch 14 und nach einem der Ansprüche 10 bis 12.

FIG.1

FIG. 2

FIG.4d

FIG.3

**0 014 662**

FIG. 3′

FIG. 4a

FIG.4b

FIG.4c

0014662

0 014 662

FIG.5a

FIG.5d

FIG.5b

FIG.5c

7

FIG.6a

FIG.6b

FIG.6c

FIG.6d

FIG. 7

FIG.8

0 014 662

# FIG. 9a

FIG.9b

# FIG. 10

FIG.11

FIG.12

14

FIG.13